(19) Europäisches Patentamt
European Patent Office
Office européen des brevets

(11) **EP 4 414 911 A1**

(12) **EUROPEAN PATENT APPLICATION**

(43) Date of publication:
**14.08.2024 Bulletin 2024/33**

(51) International Patent Classification (IPC):
**G06Q 10/063** (2023.01)   **G06Q 10/30** (2023.01)

(21) Application number: **24153659.8**

(52) Cooperative Patent Classification (CPC):
**G06Q 10/063; G06Q 10/30**

(22) Date of filing: **24.01.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 JP 2023019028**

(71) Applicant: **TOYOTA JIDOSHA KABUSHIKI KAISHA**
**Toyota-shi, Aichi-ken, 471-8571 (JP)**

(72) Inventors:
• **NITTA, Iwao**
**TOYOTA-SHI, AICHI-KEN, 471-8571 (JP)**
• **FUJIWARA, Teruyoshi**
**TOYOTA-SHI, AICHI-KEN, 471-8571 (JP)**
• **SUZUKI, Ryota**
**NAGOYA, AICHI, 451-6015 (JP)**

(74) Representative: **Cabinet Beau de Loménie**
**158, rue de l'Université**
**75340 Paris Cedex 07 (FR)**

(54) **INFORMATION PROCESSING APPARATUS, INFORMATION PROCESSING METHOD, AND NON-TRANSITORY STORAGE MEDIUM**

(57)   An information processing apparatus (1) includes a control unit (11). The control unit (11) is configured to execute: accepting registration of a target company as a virtual company from an account of a downstream company positioned downstream of the target company in a supply chain; accepting input of information on a target product of the target company, included in a product of the downstream company, from the account of the downstream company; registering the input information on the target product in association with information on the product of the downstream company; and sending communication on the information on the target product to the target company as a destination.

FIG. 22

**Description**

BACKGROUND OF THE INVENTION

1. Field of the Invention

The disclosure relates to an information processing apparatus, an information processing method, and a non-transitory storage medium.

2. Description of Related Art

There has been suggested a system with which information on dealing products is shared between a vendor company and a customer company (see, for example, Japanese Unexamined Patent Application Publication No. 2004-171146 (JP 2004-171146 A)). With this system, information can be shared on a common platform between adjacent companies in a supply chain.

SUMMARY OF THE INVENTION

The disclosure promotes companies to join a platform.

A first aspect of the disclosure provides an information processing apparatus. The information processing apparatus includes a control unit. The control unit is configured to execute: accepting registration of a target company as a virtual company from an account of a downstream company positioned downstream of the target company in a supply chain; accepting input of information on a target product of the target company, included in a product of the downstream company, from the account of the downstream company; registering the input information on the target product in association with information on the product of the downstream company; and sending communication on the information on the target product to the target company as a destination.

A second aspect of the disclosure provides an information processing method executed by a computer. The information processing method includes: accepting registration of a target company as a virtual company from an account of a downstream company positioned downstream of the target company in a supply chain; accepting input of information on a target product of the target company, included in a product of the downstream company, from the account of the downstream company; registering the input information on the target product in association with information on the product of the downstream company; and sending communication on the information on the target product to the target company as a destination.

A third aspect of the disclosure provides a non-transitory storage medium storing instructions that are executable on one or more processors and that cause the one or more processors to execute functions. The functions include: accepting registration of a target company as a virtual company from an account of a downstream company positioned downstream of the target company in a supply chain; accepting input of information on a target product of the target company, included in a product of the downstream company, from the account of the downstream company; registering the input information on the target product in association with information on the product of the downstream company; and sending communication on the information on the target product to the target company as a destination.

In the above aspects, the information on the target product may include traceability-related information of the target product.

In the above configurations, the traceability-related information may include information on at least one of an amount of emission of greenhouse effect gas, a recycling rate, and a due diligence.

In the above aspects, the communication sent may include a request to seek confirmation as to whether there is an error in the traceability-related information.

In the above configurations, the communication sent may include a request to join a platform.

In the above configurations, an account corresponding to the target company may be acquired in response to acquisition of notification of acceptance of joining the platform from the target company, and a storage area including the information on the target product may be allocated to the account created.

In the above aspects, the product of the target company may be a product related to a battery.

According to the aspects of the disclosure, it is possible to promote companies to join a platform.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram that illustrates an example of a supply chain according to a first embodiment;
FIG. 2 is a diagram that illustrates an example of a relationship among products supplied by the supply chain;
FIG. 3 is a diagram that shows the outline of a process executed between a server apparatus and company terminals;
FIG. 4 is a hardware configuration diagram of the server apparatus according to the first embodiment;
FIG. 5 is a hardware configuration diagram of each company terminal according to the first embodiment;
FIG. 6 is a software configuration diagram of the server apparatus according to the first embodiment;
FIG. 7 is a software configuration diagram of each company terminal according to the first embodiment;
FIG. 8 is an example of product information generated by a product information generating unit;
FIG. 9 is an example of a screen output by an authority setting unit;
FIG. 10 is an example of permission information generated by the authority setting unit based on information input;
FIG. 11 is an example of a user interface containing a list of products that are candidates to be associated;
FIG. 12 is a diagram that shows an example of the flow of a process executed by the server apparatus;
FIG. 13 is a diagram that illustrates a product tree and the amount of carbon dioxide emitted in each process;
FIG. 14 is an example of a screen on which a product tree is output in form of an image;
FIG. 15 is an example of a product tree in a case where products of which no access authority is given are undisclosed;
FIG. 16 is a sequence diagram that illustrates a process executed by the server apparatus and the company terminal in first to third phases;
FIG. 17 is a sequence diagram that illustrates a process executed by the server apparatus and the company terminal in a fourth phase;
FIG. 18 is a diagram that illustrates an example of a relationship among products in a supply chain;
FIG. 19 is a table that shows an example of product information generated by an information collecting unit or a proxy input unit;
FIG. 20 is a diagram that shows an example of a case where a storage area corresponding to a virtual company is generated in a storage unit;
FIG. 21 is a diagram that shows an example of a storage area at the time when the storage area allocated to the virtual company is allocated to a second company;
FIG. 22 is a sequence diagram that shows an example of the flow of a process in which the server apparatus registers second product information;
FIG. 23 is a flowchart that shows an example of the flow of a process of registering a second product, executed in the server apparatus;
FIG. 24 is a flowchart that shows an example of the flow of a process of correcting product information of a second product, executed in the server apparatus; and
FIG. 25 is a flowchart that shows an example of the flow of a process of registering product information of a second product as a product of the second company, executed in the server apparatus.

DETAILED DESCRIPTION OF EMBODIMENTS

Carbon footprint (Carbon Footprint of Products (CFP)) is a mechanism for converting the amount of emission of greenhouse effect gas emitted through the entire life cycle from raw material procurement of commercial products to disposal and recycling to $CO_2$ emission amount and indicating the $CO_2$ emission amount on the commercial products. To implement CFP, traceability in which suppliers involved from raw material procurement of commercial products to disposal and recycling are recorded and a history is placed in a traceable state is important.

To ensure traceability of CFP or the like, it is desired to collect the information not only between adjacent companies but also over the entire supply chain. However, all the companies in a supply chain do not always immediately join the platform. With the existing system, there is an inconvenience that, when there is a company that has not joined a platform, collection of information on traceability stagnates. This inconvenience is not limited to a scene to collect carbon footprint. The inconvenience can arise in, for example, every scene to collect selected information on products, such as other traceability-related information (for example, a raw material recycling rate, due diligence information, or the like) and information on the other products (for example, constituent elements, identification information, and the like).

An information processing apparatus that is one of the aspects of the disclosure includes a control unit. The control unit is configured to execute: accepting registration of a target company as a virtual company from an account of a downstream company positioned downstream of the target company in a supply chain; accepting input of information on a target product of the target company, included in a product of the downstream company, from the account of the downstream company; registering the input information on the target product in association with information on the product of the downstream company; and sending communication on the information on the target product to the target company as a destination. In an example, the virtual company may be referred to as a virtual supplier or a (virtual) tenant.

With the aspect of the disclosure, the control unit can register a target company as a virtual company in response to a request from a downstream company. At the time of accepting a request from the downstream company, the target company is a company not registered in the platform (that is, the target company has not joined the platform). The virtual company is a company that has not joined the platform; however, the virtual company is a company that is registered on the assumption that the virtual company has joined the platform. On the other hand, the downstream company is a company that has already joined the platform. Therefore, information on the downstream company has been already registered, and an account is allocated from the platform to the downstream company. For example, the downstream company is a company that has dealt with the target company. Therefore, even when the target company has not joined the platform, the downstream company knows the presence of the target company. For this reason, the downstream company may have information with which the target company can be registered in the platform. With the aspect of the disclosure, since the information on the target company is provided from the downstream company, the information on the target company can be registered in the platform. At this time, it is not clear whether the target company itself has an intention to join the platform, so the target company is registered as a virtual company.

The target product is a product included in the product of the downstream company, and is a product positioned closer to a leaf node of a tree structure than the product of the downstream company. These products may be, for example, materials, stand-alone parts, assembly parts, finished commercial products, or the like. The target product may be the same product as the product of the downstream company. In this case, for example, the target company may be a company that transports the product of the downstream company. The downstream company also has the information on the target product, so the downstream company can also provide the information on the target product.

The control unit registers the information on the target product in association with the information on the product of the downstream company. In an example, the control unit associates and registers the product of the downstream company such that the product of the downstream company is positioned downstream of the target product. When the target product is registered in this way, it is possible to ensure traceability including the target product.

The target company can be registered as a virtual company in this way; however, when the target company officially joins the platform, it is possible to obtain further accurate information. A company upstream of the target company can also be similarly registered as a virtual company. The control unit sends communication on the information on the target product to the target company as a destination. The communication may be communication by way of data communication, such as e-mail, via a network or communication by way of mail. The destination of the target company may be included in information input by the downstream company.

The information processing apparatus may be a server of the platform. In another method, the information processing apparatus may be a server that is independent of the platform and that provides the platform with information acquired from a terminal of the downstream company.

The information on the target product may include traceability-related information of the target product. The traceability-related information is information required to ensure traceability. The traceability-related information is typically information for calculating the amount of emission of greenhouse effect gas, the recycling rate of raw material, a score for due diligence, or the like. With this configuration, it is possible to ensure traceability in the supply chain.

The communication sent may include a request to seek confirmation as to whether there is an error in the traceability-related information. There is a possibility that an error is included in the information input by the downstream company. In contrast, if the target company checks whether there is an error in the information, it is possible to increase the accuracy of the information.

The communication sent may include a request to join a platform. When the target company joins the platform, the target company can update information even when there is a change in the traceability-related information of the target product, so it is possible to increase the accuracy of the information.

The control unit may be further configured to execute: creating an account corresponding to the target company in response to acquisition of notification of acceptance of joining the platform from the target company; and allocating a storage area including the information on the target product to the account created. Before the target company joins the platform, the information on the target product is disposed in the storage area. If the target company takes over the information on the target product already disposed in the storage area when the target company joins the platform, time and effort that the target company newly inputs traceability-related information is saved.

The product of the target company may be a product related to a battery. In other words, the product of the target company may be a product used at the time of manufacturing a battery. In an example, the battery may be the one used for a battery electric vehicle. With this configuration, it is possible to ensure traceability on a battery.

Hereinafter, embodiments of the disclosure will be described with reference to the accompanying drawings. The configurations of the following embodiments are illustrative, and the disclosure is not limited to the configurations of the embodiments. The following embodiments may be combined as long as possible.

First Embodiment

A system according to the present embodiment is a system that provides information on products supplied by a supply chain including a plurality of companies. Information on products is typically information on traceability.

Initially, the structure of a supply chain will be described. In an example, at least some companies (intermediate suppliers) included in the supply chain can receive parts from one or more upstream companies, produce their own company's products by using the parts received, and supply their own company's products produced to companies (downstream companies) in the next process. A most upstream company can directly produce its own company's products and supply its own company's products produced to a company in the next process. Some companies of the supply chain can directly supply (that is, be involved in distribution of) products received from another company to a different company. A plurality of companies repeats this flow, and final products are obtained in the last process.

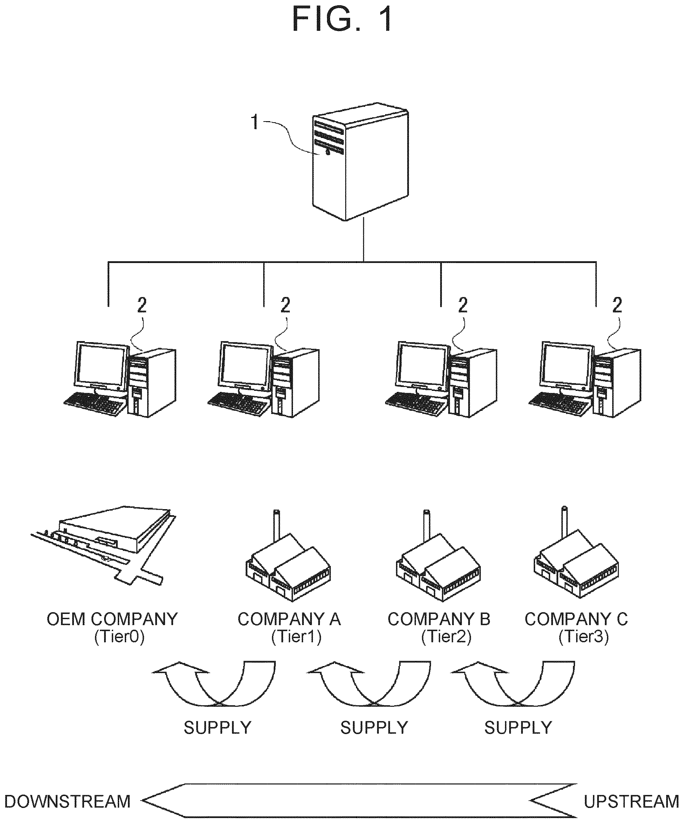

FIG. 1 is a diagram that illustrates an example of the supply chain according to the present embodiment. In the example of FIG. 1, a scene where products on automobiles are obtained is assumed. Specifically, the supply chain shown in FIG. 1 is made up of an OEM company and a plurality of companies that are suppliers. The OEM company is a company that provides end products assembled, and the companies (Company A, Company B, and Company C) that are suppliers are companies that supply parts, materials, assemblies, and the like for manufacturing end products. The companies that are suppliers each produce a plurality of products and supply the products to companies at a level lower by one. The companies repeat this flow, and assembly of final products is performed in the last process.

In the present embodiment, a side that supplies products at one level is referred to as an upstream side, and a side that purchases the products and produces new products is referred to as a downstream side. In the specification, a company positioned at the upstream side is referred to as an upstream company, and a company positioned at the downstream side is referred to as a downstream company. Products produced by an upstream company are referred to as upstream products, and products produced by a downstream company are referred to as downstream products. Downstream products include upstream products.

In the present embodiment, levels in the supply chain are referred to as Tiers. Tier0 is the lowest level that provides final products assembled (that corresponds to the OEM company), and, as the level advances in order of Tier1, Tier2, and Tier3, the level shifts toward the upstream side. Depending on a level focused, a downstream company may be changed to an upstream company. For example, Company B in Tier2 is a downstream company in relation to Tier3 but is an upstream company in relation to Tier1. In this way, the definition of upstream company and downstream company can change level by level.

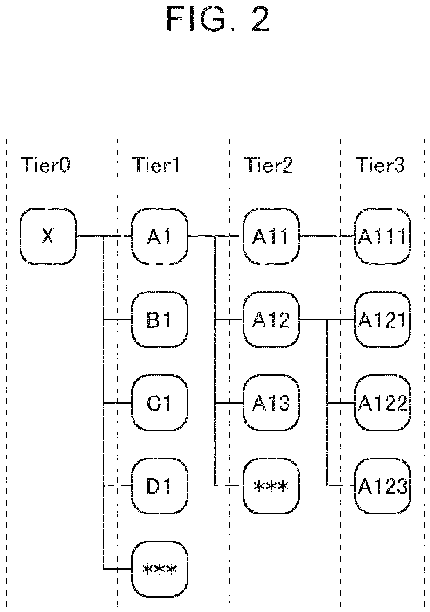

FIG. 2 is a diagram that illustrates an example of a relationship among products supplied by a supply chain. Here, a supply relationship of a plurality of products that make up an end product X is represented by a tree diagram. In this example, the end product X is produced by assembling products A1, B1, C1, D1, ... The product A1 is produced by assembling products A11, A12, A13, ... In this way, a relationship among a plurality of products that make up an end product can be represented by a tree diagram with individual products as nodes. Hereinafter, a tree diagram on a specific end product is referred to as a product tree. In an example, the end product X is a battery to be mounted on a battery electric vehicle (BEV). In another example, the end product X may be an automobile or a product relevant to an automobile, such as an assembly of an automobile.

In a supply chain, the depths of the levels of all the most upstream companies do not always coincide with one another. In the example of FIG. 2, companies of products A111, A121, A122, A123, A13, B1, C1, and D1 are most upstream companies. Of these companies, the companies of products B1, C1, and D1 are Tier1, the company of product A13 is Tier2, and the companies of products A111, A121, A122, and A123 are Tier3. In this case, the depths of the levels in the overall supply chain may be counted with reference to the deepest most upstream company. In other words, the depth of the level of the supply chain may be defined by the number of levels from the most downstream company to the deepest most upstream company. In the example of FIG. 2, the depth of the level of the supply chain may be calculated as "4". Therefore, in a case where the depth of the level of the supply chain is designated so as to be deeper than or equal to the third level, when the most upstream company at the deepest level is third level (Tier2 in FIG. 2) or deeper, some of the most upstream companies may be at the second level (Tier1 in FIG. 2) (of course, the depths of the levels of all the most upstream companies may be deeper than or equal to the third level).

A server apparatus 1 (information processing apparatus) according to the present embodiment collects information on products produced by companies (hereinafter, product information) and information for associating pieces of product information from terminals corresponding to companies (company terminals 2) and generates a product tree based on these pieces of information. Product information includes information on traceability (for example, information on the amount of emission of greenhouse effect gas, or the like; hereinafter, referred to as "traceability-related information"). It is possible to trace carbon footprint or the like by tracking a product tree. Traceability-related information may include every information that can be a target to ensure traceability.

As shown in FIG. 1, the information processing system according to an example of the present embodiment includes the server apparatus 1 and the company terminals 2. The company terminals 2 are terminals respectively corresponding to the companies that make up the supply chain. The company terminals 2 included in the system may be multiple. The server apparatus 1 collects information for generating a product tree from each of the company terminals 2 and generates a product tree based on these pieces of information. Furthermore, the server apparatus 1 is capable of executing a process on traceability (typically, a process of calculating the amount of emission of carbon dioxide, or the like) based on the product tree generated. The server apparatus 1 is also capable of sending the execution result of the process to the company terminals 2.

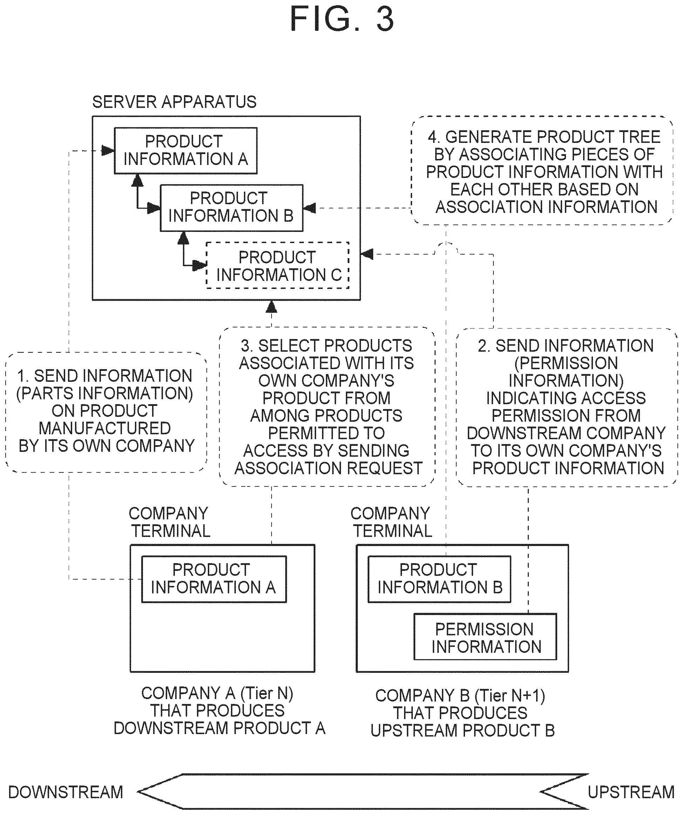

Next, the outline of a process in which the server apparatus 1 generates a product tree will be described with reference to FIG. 3. FIG. 3 is a diagram that shows the outline of a process executed between the server apparatus 1 and the company terminals 2. In the example of FIG. 3, it is assumed that, at a selected level, there are Company A that is a downstream company and Company B that is an upstream company. It is assumed that Company B produces a product B and supplies the product B to Company A and Company A produces a product A by using the product B. In other words, in the example of FIG. 3, the product B is a child node of the product A in the product tree.

To generate a product tree, the company terminals 2 respectively corresponding to the companies each send information on products produced by itself to the server apparatus 1. In this example, the company terminal 2 corresponding to Company A sends product information on the product A (referred to as product information A) to the server apparatus 1. Similarly, the company terminal 2 corresponding to Company B sends product information on the product B (referred to as product information B) to the server apparatus 1. The product information of each company is stored in the server apparatus 1.

An operation to associate the pieces of product information stored in the server apparatus 1 is performed by the company terminal 2. In an example, a person in charge of the downstream company logs onto the server apparatus 1 from the company terminal 2 with an account of the downstream company and selects an upstream product with which the downstream product that is its own company's product is associated. In this way, association of pieces of product information with each other is performed from the downstream product to the upstream product. The server apparatus 1 associates the pieces of product information based on the selection.

However, when a product with which a product is associated is selected, if products in the supply chain and pieces of information on the products all are presented as choices, confidentiality of both information on companies that make up the supply chain and information on products produced by the companies is impaired. Furthermore, it may not be reasonable to disclose the whole of the product tree to one supplier.

For this reason, the server apparatus 1 according to the present embodiment gives in advance authority to access product information of an upstream product to a downstream company in response to a request from an upstream company. The server apparatus 1 permits access from the downstream company within the range of authority given.

In the example of FIG. 3, the company terminal 2 corresponding to Company B that is an upstream company sends the server apparatus 1 a request (information) to provide instructions to "give Company A authority to access the product information B". When the server apparatus 1 receives a request regarding association from the company terminal 2 corresponding to Company A, the server apparatus 1 provides only a list of pieces of product information of which access authority is given to Company A and prompts for selecting as a target to be associated. When there is a request to access the product tree from the company terminal 2 corresponding to Company A, the server apparatus 1 provides the company terminal 2 with a product tree in which information other than information to which access authority is given to Company A is concealed. Thus, it is possible to conceal information on irrelevant companies and products.

Hardware Configuration

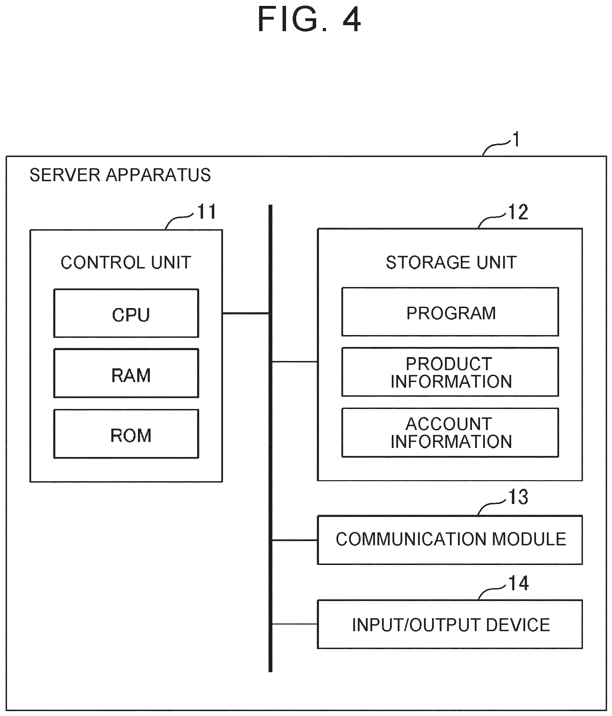

Next, the hardware configuration of each of the devices that make up the system will be described with reference to FIG. 4. FIG. 4 is a diagram that schematically shows an example of the hardware configuration of the server apparatus 1 according to the present embodiment. The server apparatus 1 is configured as a computer including a control unit 11, a storage unit 12, a communication module 13, and an input/output device 14.

The server apparatus 1 may be configured as a computer including a processor (a CPU, a GPU, or the like), a main storage device (a RAM, a ROM, or the like), and an auxiliary storage device (an EPROM, a hard disk drive, a removable medium, or the like). An operating system (OS), various programs, various tables, and the like are stored in the auxiliary storage device. Various functions (software modules) that match predetermined purposes as will be described later can be implemented by running the programs stored in the auxiliary storage device. One, some, or all of the modules may be implemented as hardware modules by a hardware circuit, such as an ASIC and an FPGA.

The control unit 11 is an arithmetic unit that implements various functions of the server apparatus 1 by running predetermined programs. The control unit 11 can be implemented by, for example, a hardware processor, such as a CPU. The control unit 11 may be configured to include a RAM, a read only memory (ROM), a cache memory, or the like.

The storage unit 12 is a device that stores information and is a storage medium, such as a RAM, a magnetic disk, and a flash memory. Programs to be run on the control unit 11, data used by the programs, and the like are stored in the storage unit 12. A database is constructed in the storage unit 12. Product information collected from the company terminals 2 and account information on companies are stored in the database. Details will be described later.

The communication module 13 is a communication interface for connecting the server apparatus 1 with a network. The communication module 13 may be configured to include, for example, a network interface board, a wireless communication interface for wireless communication, and the like. The server apparatus 1 is capable of performing data communication with another computer (for example, another server apparatus 1 or each company terminal 2) via the communication module 13.

The input/output device 14 is a device that receives an input operation performed by an operator and presents information to the operator. Specifically, the input/output device 14 includes a device for inputting, such as a mouse and a keyboard, and a device for outputting, such as a display and a speaker. The input/output device 14 may be, for example, integrally configured by a touch panel display or the like.

For a specific hardware configuration of the server apparatus 1, omissions, replacements, or additions of components are applicable as needed according to embodiments. For example, the control unit 11 may include a plurality of hardware processors. The hardware processor may be a microprocessor, an FPGA, a GPU, or the like. The input/output device 14 may be omitted or an input/output device (for example, an optical disk drive or the like) other than the illustrated one may be added. The server apparatus 1 may be made up of a plurality of computers. In this case, the hardware configuration of each computer may be the same or may be different.

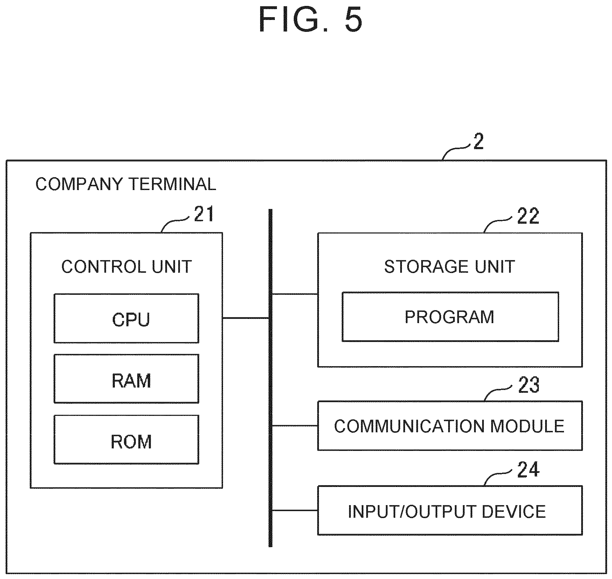

FIG. 5 is a diagram that schematically shows an example of the hardware configuration of the company terminal 2 according to the present embodiment. The company terminal 2 is configured as a computer including a control unit 21, a storage unit 22, a communication module 23, and an input/output device 24.

The company terminal 2, as in the case of the server apparatus 1, may be configured as a computer including a processor (a CPU, a GPU, or the like), a main storage device (a RAM, a ROM, or the like), and an auxiliary storage device (an EPROM, a hard disk drive, a removable medium, or the like). One, some, or all of the functions (software modules) may be implemented as hardware modules by a hardware circuit, such as an ASIC and an FPGA.

The control unit 21 is an arithmetic unit that implements various functions (software modules) of the company terminal 2 by running predetermined programs. The control unit 11 can be implemented by, for example, a hardware processor, such as a CPU. The control unit 21 may be configured to include a RAM, a read only memory (ROM), a cache memory, or the like.

The storage unit 22 is a device that stores information and is a storage medium, such as a RAM, a magnetic disk, and a flash memory. Programs to be run on the control unit 21, data used by the programs, and the like are stored in the storage unit 22.

The communication module 23 is a communication interface for connecting the company terminal 2 with a network. The communication module 23 may be configured to include, for example, a network interface board, a wireless communication interface for wireless communication, and the like. The company terminal 2 is capable of performing data communication with another computer (for example, the server apparatus 1) via the communication module 23.

The input/output device 24 is a device that receives an input operation performed by an operator and presents information to the operator. Specifically, the input/output device 24 includes a device for inputting, such as a mouse and a keyboard, and a device for outputting, such as a display and a speaker. The input/output device 24 may be, for example, integrally configured by a touch panel display or the like.

For a specific hardware configuration of the company terminal 2, as in the case of the server apparatus 1, omissions, replacements, or additions of components are applicable as needed according to embodiments.


Software Configuration


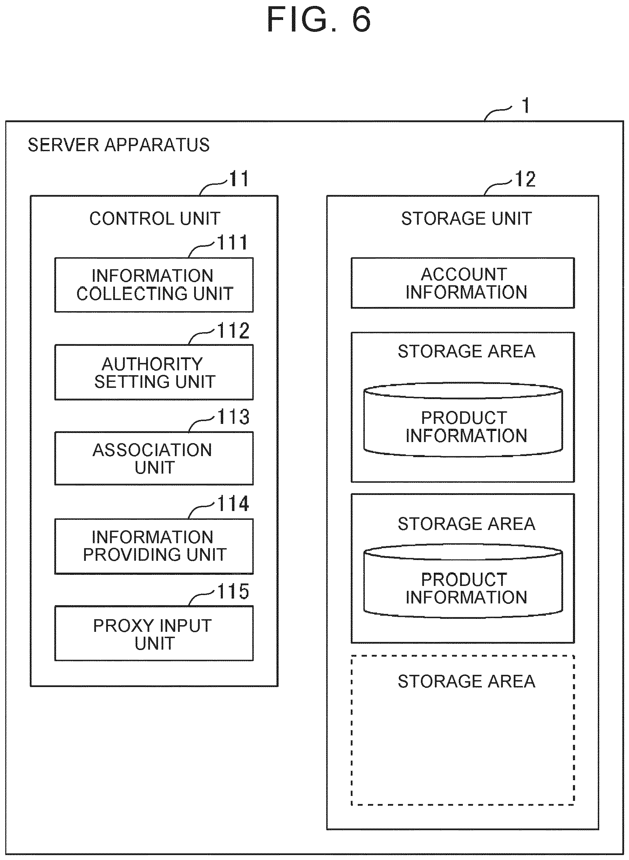

Next, the software configuration of each of the devices that make up the system will be described with reference to FIG. 6. FIG. 6 is a diagram that schematically shows an example of the software configuration of the server apparatus 1 according to the present embodiment. In the present embodiment, the control unit 11 is configured to include five software modules, that is, an information collecting unit 111, an authority setting unit 112, an association unit 113, an information providing unit 114, and a proxy input unit 115. The software modules may be implemented by the control unit 11 (CPU) running the programs stored in the storage unit 12. Information processing executed by the information collecting unit 111, the authority setting unit 112, the association unit 113, the information providing unit 114, and the proxy input unit 115 is synonymous with information processing executed by the control unit 11.

The information collecting unit 111 is configured to execute a process of receiving product information sent from the company terminal 2 and storing the product information in the storage unit 12. The authority setting unit 112 is configured to receive information for setting authority to access product information (hereinafter, permission information) from the company terminal 2. Furthermore, the authority setting unit 112 is configured to execute a process of setting authority to access the product information stored in the storage unit 12 based on the information received.

The association unit 113 is configured to acquire information for associating pieces of product information with each other, from the company terminal 2 by performing interaction with the company terminal 2. Furthermore, the association unit 113 is configured to execute a process of writing information indicating an association relationship on the product information stored in the storage unit 12 based on the information acquired. The association unit 113 is configured to execute a process of receiving a request to give termination information and giving the termination information to the product information stored in the storage unit 12 in response to this request. A product tree is formed by reflecting association and giving termination. In other words, forming a product tree is saving association information and termination information in the storage unit 12. The association unit 113 is configured to generate a product tree according to the result of association and giving termination.

The information providing unit 114 is configured to execute information processing relevant to a product tree and output a result obtained by executing information processing. The information processing relevant to a product tree may include a process of performing computation on traceability for a product tree. Outputting the result obtained by executing information processing may include a process of providing the company terminal 2 with information on the product tree generated. In an example, the information providing unit 114 is configured to generate information on a product tree and output information on the product tree generated.

The proxy input unit 115 is configured to execute a process of receiving information on the upstream company, sent from the company terminal 2 of the downstream company, and storing the information on the upstream company in the storage unit 12.

In the present embodiment, the storage unit 12 is configured to include a plurality of logical storage areas. Different access authority can be set to each of the plurality of storage areas like, for example, an area in which access authority is given to Company A, an area in which access authority is given to Company B, and an area in which access authority is given to both Company A and Company B. The authority setting unit 112 sets access authority by storing product information received from the company terminal 2 in an appropriate storage area. A specific processing method will be described later.

Account information is stored in the storage unit 12. In the present embodiment, an operator of each company logs onto the server apparatus 1 by using a corresponding account of the company via the company terminal 2 to perform interaction between the server apparatus 1 and the company terminal 2. Account information is information on an account corresponding to each of the companies that make up the supply chain. Logging on by using an account is an example of a corresponding company accessing the server apparatus 1. However, a method of accessing the server apparatus 1 is not limited to such an example and may be selected as needed according to embodiments.

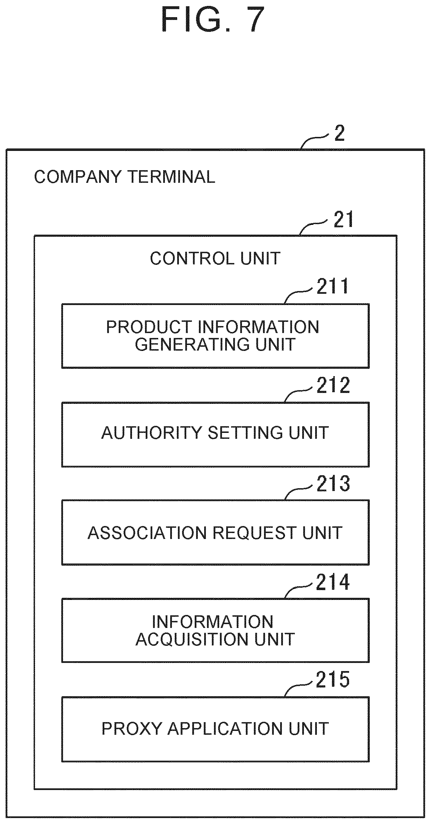

FIG. 7 is a diagram that schematically shows the software configuration of the company terminal 2 according to the present embodiment. In the present embodiment, the control unit 21 is configured to include five software modules, that is, a product information generating unit 211, an authority setting unit 212, an association request unit 213, an information acquisition unit 214, and a proxy application unit 215. The software modules may be implemented by the control unit 21 (CPU) running the programs stored in the storage unit 22. Information processing executed by the product information generating unit 211, the authority setting unit 212, the association request unit 213, the information acquisition unit 214, and the proxy application unit 215 is synonymous with information processing executed by the control unit 21.

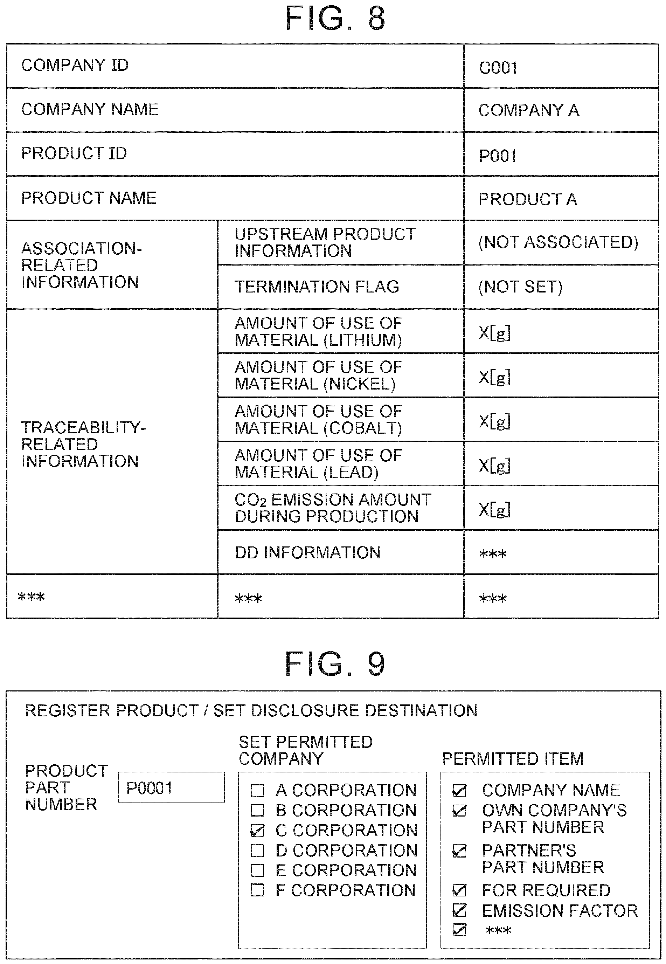

The product information generating unit 211 is configured to generate information on products (product information) of the company corresponding to the company terminal 2. FIG. 8 is an example of product information generated by the product information generating unit 211. Product information may be input via an operator of the device. In the present embodiment, product information is configured to include fields of company ID, company name, product ID, and product name. A company ID and a company name are respectively an identifier and a name of a company that produces a target product (that is, a company that uses the company terminal 2). A product ID and a product name are respectively an identifier and a name of the target product.

Furthermore, product information is configured to include association-related information. Association-related information is information for identifying an upstream product associated with the target product. In the present embodiment, association-related information includes fields of "upstream product information" and "termination flag".

The upstream product information field is configured to store information for identifying product information corresponding to the upstream product (that is, a product needed to produce the target product and included in the target product) associated with the target product. The upstream product information field is used when the server apparatus 1 associates products with each other. Basically, in the phase in which product information is generated, the target product is not associated with the upstream product, so a value indicating the upstream product does not need to be stored in the upstream product information field.

The termination flag field is configured to store a flag indicating whether a target product is a leaf node in a product tree, that is, a node positioned at the most upstream side (end). In the present embodiment, since the company terminals 2 send product information, the flag is used to determine whether a product is further associated on the upstream side or no more association occurs (a target product is positioned at the most upstream side) for a product in a product tree. In other words, the termination flag field is used at the time when the server apparatus 1 finalizes association of products with each other. Basically, in the phase in which product information is generated, an association relationship of the target product is not determined, so "0 (currently not a termination)" may be stored in the termination flag field. Finally, to generate a product tree, product information of each company, stored in the server apparatus 1, is set to a state of any one of "association with the upstream product has been performed" and "the termination flag is set to "1"".

Furthermore, product information is configured to include traceability-related information. In an example, traceability-related information may include the amount of use of materials (for example, upstream products) per the amount of production of products, information on the recycling rate of predetermined raw materials, the amount of emission of greenhouse effect gas emitted at the time of producing products (CFP value), due diligence-related information, or a combination of some of them. Examples of the predetermined raw materials may include lithium, nickel, cobalt, lead, and graphite. The recycling rate may be directly represented or may be indirectly represented like, for example, a combination of a total use amount and the amount of use of recycled materials. These values are values corresponding to a process of producing a target product. For example, in the example of FIG. 3, the amount of greenhouse effect gas, or the like, emitted in production activity for the product A is stored in the traceability-related information included in the product information A. The traceability-related information included in the product information A does not include information on a process until an upstream product is produced (for example, the amount of greenhouse effect gas emitted by the time the upstream product B is produced, or the like).

The traceability-related information may be selected as needed according to embodiments. In an example, the amount of emission of greenhouse effect gas (carbon footprint) may include the amounts of emission of scope 1, scope 2, and scope 3. The scope 1 may be the amount of direct emission of greenhouse effect gas by itself. The scope 2 may be the amount of indirect emission resulting from use of electricity, heat, and vapor supplied from another company. The scope 3 may be the amount of indirect emission other than the scope 1 or the scope 2. In an example, the due diligence-related information may be a technical document indicating that, for a product that contains a target raw material (for example, cobalt, natural graphite, lithium, nickel, or the like), proves that obligations of the amount of raw materials contained in the product and responsible mineral procurement of a smelter or the like are fulfilled. In another example, the due diligence-related information may include a score indicating a degree to which the obligations are fulfilled.

The product information generating unit 211 is configured to acquire such information via the operator of the company terminal 2 and send the information to the server apparatus 1 at selected timing.

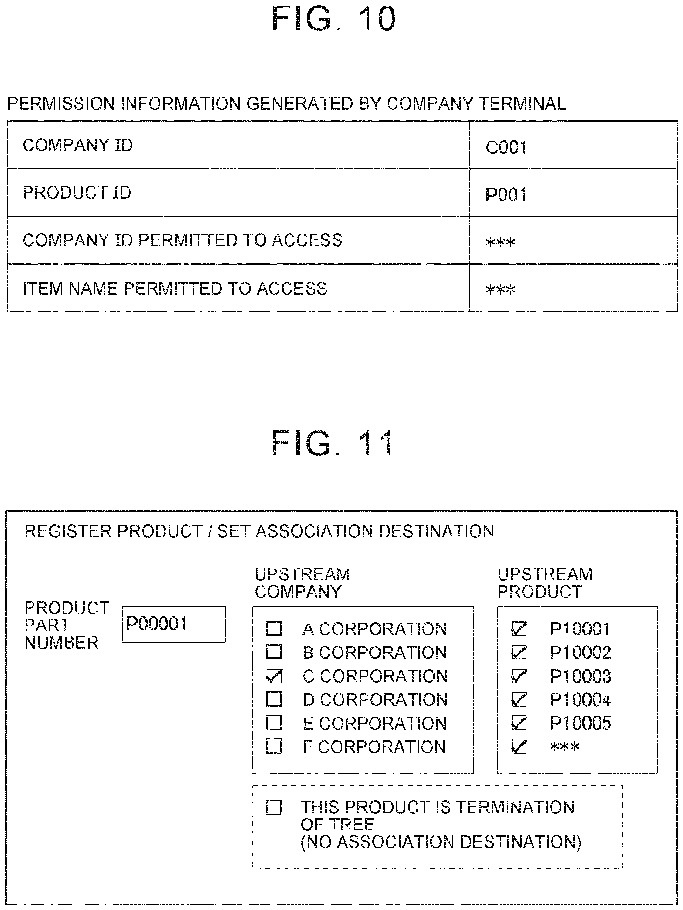

The authority setting unit 212 is configured to designate a downstream company permitted to access product information sent from the company terminal 2 to the server apparatus 1. FIG. 9 is an example of a screen output by the authority setting unit 212. As shown in the drawing, the authority setting unit 212 is configured to receive designation of a downstream company permitted to access a selected own company's product. FIG. 10 is an example of permission information generated by the authority setting unit 212 based on information input. The authority setting unit 212 is configured to send permission information to the server apparatus 1 at selected timing. Access authority may be set in units of product information or may be set in units of item included in product information ("permission item" in the table). Thus, for example, partial disclosure like, for example, the presence of a product is disclosed but specific information on materials used, the amount of use, and the like is not disclosed, is possible.

A list of companies shown on the screen of FIG. 9 may be a list of companies having dealt with the own company in the past. Therefore, the server apparatus 1 may store data on past deal (dealing data) for each company and generate a list of companies based on the dealing data. Dealing data may include, for example, an identifier of a target product, an identifier of a company that produces the product, a date of deal, and the like.

The association request unit 213 is configured to make a request of the server apparatus 1 to associate its own company's product information sent to the server apparatus 1 with an upstream product. In an example, initially, the association request unit 213 sends its own company ID and product ID to the server apparatus 1 and makes a request of the server apparatus 1 to associate the product ID with corresponding product information. In contrast, the server apparatus 1 generates a user interface containing a list of product information (that is, candidates to be associated) permitted to access from a target company and provides the user interface generated to the company terminal 2. FIG. 11 is an example of the user interface containing a list of products permitted to access from a target company.

The list of products shown in FIG. 11 may be a list of products that have been dealt with its own company in the past. The server apparatus 1 may generate the list further based on the dealing data stored.

Subsequently, the association request unit 213 is configured to allow the operator to select an upstream product to be associated, from the list. The association request unit 213 is configured to send an identifier of a product that is a source of association (downstream product) and an identifier of an upstream product that is a destination of association in pair to the server apparatus 1. The server apparatus 1 is allowed to associate pieces of product information with each other accordingly.

When there is no upstream product associated with a target product, it is possible to explicitly indicate the fact by, for example, checking a checkbox indicated by the dashed line in FIG. 11. In this case, association of pieces of product information with each other is not performed.

The information acquisition unit 214 is configured to make a request of the server apparatus 1 to provide a product tree and output information sent from the server apparatus 1. The proxy application unit 215 is configured to execute a process of making a request of the server apparatus 1 to register information on an upstream company.

Details of Process on Formation of Product Tree

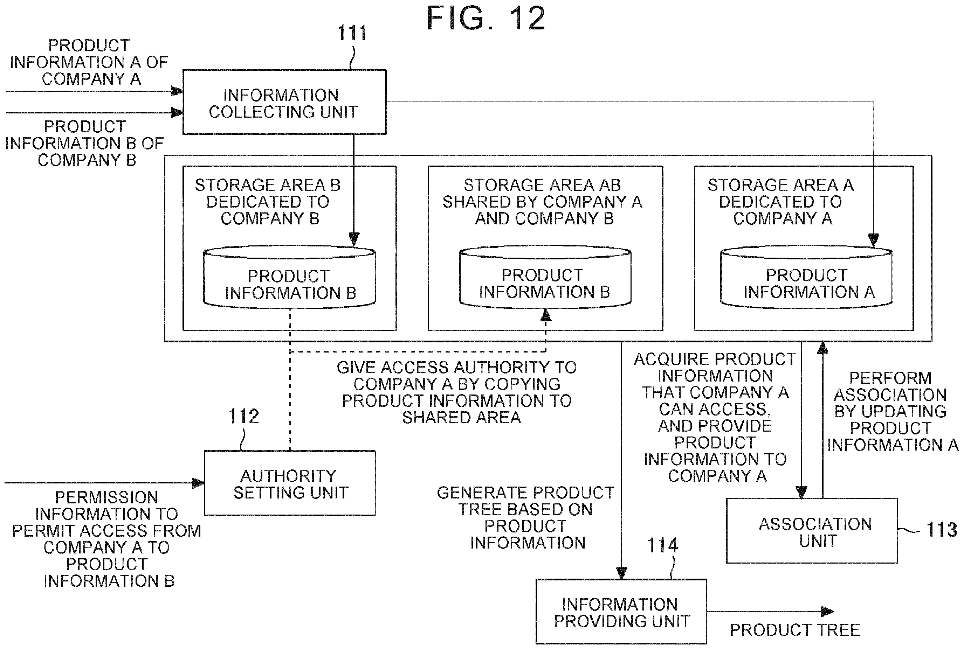

Next, specific details of a process executed by the server apparatus 1 and the company terminal 2 will be described. FIG. 12 is a diagram that shows an example of the flow of a process executed by the server apparatus 1 based on a request from the company terminal 2. The process executed by the server apparatus 1 is divided into the following four phases:

(1) a first phase in which product information sent from the company terminal 2 is received and the product information received is stored;
(2) a second phase in which permission information sent from the company terminal 2 is received and authority to access the product information is set according to the permission information received;
(3) a third phase in which pieces of product information are associated with each other by performing interaction with the company terminal 2; and
(4) a fourth phase in which information on a product tree is provided based on the result of association.

In the example of FIG. 12, it is assumed that Company A is a downstream company and Company B is an upstream company. It is also assumed that a product produced by Company A is a product A and a product produced by Company B is a product B. It is also assumed that product information corresponding to the product A is product information A and product information corresponding to the product B is product information B.

In the first phase, the information collecting unit 111 of the server apparatus 1 acquires product information from the product information generating unit 211 of the company terminal 2. In the example of FIG. 12, the server apparatus 1 acquires the product information A from the company terminal 2 corresponding to Company A and acquires the product information B from the company terminal 2 corresponding to Company B. The information collecting unit 111 saves the product information A in a storage area of which access authority is given to only Company A (hereinafter, storage area A). The information collecting unit 111 saves the product information B in a storage area of which access authority is given to only Company B (hereinafter, storage area B). In this way, the information collecting unit 111 saves product information sent from any company in a dedicated storage area of which access authority is given to only the company.

In the second phase, the authority setting unit 112 of the server apparatus 1 receives permission information from the authority setting unit 212 of the company terminal 2 and sets authority to access product information according to the permission information received. Permission information is the one that associates a product with a company that permits access to product information of the product as shown in FIG. 10.

In the example of FIG. 12, it is assumed that the authority setting unit 112 receives permission information to permit access from Company A that is the downstream company to the product information B of the upstream company. In this case, the authority setting unit 112 copies the product information B stored in the storage area B to a storage area of which access authority is given to both Company A and Company B (hereinafter, storage area AB). Thus, the product information B is placed in a state accessible from both Company A and Company B. When authority to access a specific item included in product information is not set, the item is excluded from those to be copied to the storage area AB.

In the following description, a storage area of which access authority is given to only a specific company is referred to as "dedicated storage area", and a storage area of which access authority is given to a plurality of companies is referred to as "shared storage area".

Product information is copied by the server apparatus 1 in response to reception of permission information from the company terminal 2. In other words, the company terminal 2 sends permission information to the server apparatus 1 to cause the server apparatus 1 to execute an operation to copy product information identified by the permission information from a dedicated storage area of a target company to a shared storage area accessible from a downstream company.

In the third phase, the association unit 113 of the server apparatus 1 receives an association request from the association request unit 213 of the company terminal 2 and associates pieces of product information with each other based on the association request received.

Initially, the association unit 113 receives an association request from the company terminal 2. The association request is sent from the company terminal 2 of a downstream company. In the example of FIG. 12, it is assumed that the company terminal 2 of Company A has sent an association request. The association request includes a company ID and a product ID of a target product. The association unit 113 acquires product information stored in a storage area accessible from the company and generates a list of product information acquired. In the example of FIG. 12, the product information B stored in the storage area AB is accessible from Company A. Therefore, in the company terminal 2 of Company A, the product information B is selectable as a destination of association.

The association request unit 213 of the company terminal 2 presents a list to an operator and allows the operator to select products to be associated. In the case of this example, the product A and the product B are targets to be associated with each other. The operator, for example, inputs information indicating that the upstream product is the product B for the product A via the input/output device 24. The association request unit 213 sends data for associating the upstream product (product B) with the downstream product (product A) (association data) to the association unit 113.

As illustrated in FIG. 8, product information has a field on a product that is a destination of association (association-related information). The association unit 113 stores information corresponding to the product information B (that is, the upstream product) in the association-related information of the product information A based on the above-described association data. For example, an identifier of an upstream product, an identifier of a company that produces the upstream product, and the like are stored in the association-related information.

A pointer or the like to product information that is a destination of association may be stored in the association-related information. A pointer is to point out the address or the like of product information corresponding to an upstream product. With the process described above, part of a tree structure in which product information of the downstream product is a parent node and product information of the upstream product is a child node is formed.

At the terminal of the product tree, further more association is not performed. In this case, the association request unit 213 sends data indicating that the product is the terminal of a tree instead of sending association data. When the association unit 113 receives the data, the association unit 113 sets "1" to the termination flag field of corresponding product information. In other words, in the third phase, any one of "a process of setting an upstream product that is a destination of association" and "a process of setting a termination flag" is executed.

In the fourth phase, the information providing unit 114 of the server apparatus 1 generates information on a product tree based on the product information stored and outputs information on the product tree. Generating information on a product tree may include a process of, after a link between nodes is formed by association of pieces of product information with each other, generating various pieces of information on products (for example, information on traceability, an image representing a link relationship between products in a tree diagram, or the like). To generate information on a product tree, all the association of pieces of product information with each other needs to be complete, and "1" needs to be set to the termination flags of all the leaf nodes. When such conditions are satisfied, the information providing unit 114 is allowed to appropriately generate the information.

A product tree according to the present embodiment, as described with reference to FIG. 2, is the one representing a supply relationship among pieces of product information in a supply chain in a tree diagram. The information providing unit 114 is capable of generating an image representing a tree diagram based on product information.

Furthermore, when the information providing unit 114 generates information on a product tree, the information providing unit 114 integrates traceability-related information defined in each piece of product information with one another and outputs the result.

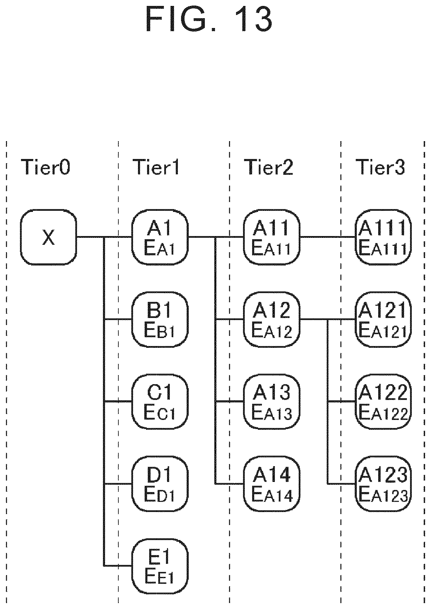

Here, integration of traceability-related information will be described with reference to FIG. 13. FIG. 13 is a diagram that illustrates a plurality of products that make up an end product X and the amount of carbon dioxide ($CO_2$) emitted in each process to produce these plurality of products. For example, it is assumed that, in a process of producing a product A12 in the diagram, $E_{A12}$ [g] of carbon dioxide is emitted. It is also assumed that the product is made up of three upstream products A121, A122, A123. In this way, an upstream product included in a product is also referred to as "inclusion product". Here, a total amount of carbon dioxide emitted by the time a target product is produced can be obtained by repeating a process of transferring a $CO_2$ emission amount associated with an upstream product to a downstream product between companies of two adjacent layers from a most upstream product that is a leaf node to the target product.

In the example of FIG. 13, when the target product is A12, a $CO_2$ emission amount corresponding to inclusion products (upstream products A121, A122, A123) and a $CO_2$ emission amount corresponding to the product A12 are added up. Thus, it is possible to calculate the total amount of carbon dioxide emitted by the time the product A12 is produced. In other words, the $CO_2$ emission amount integrated for the product A12 is as follows.

$$I_{A12} = E_{A12} + E_{A121} \times U_{A121} + E_{A122} \times U_{A122} + E_{A123} \times U_{A123} \text{ [g]}$$

Here, it is assumed that $E_{A121}$, $E_{A122}$, and $E_{A123}$ are respectively the $CO_2$ emission amounts per unit amount at the time of producing the corresponding products A121, A122, A123. $U_{A121}$, $U_{A122}$, and $U_{A123}$ are respectively the amounts of use of the products A121, A122, A123 used to produce the product A12. The amount of use is an example of the amount of use of material per the amount of production of a product, included in the traceability-related information. The $CO_2$ emission amount of an end product (a product of a most downstream company) can be obtained by sequentially performing the computation from the product of the most upstream company to the end product.

The same applies to a case where the target product is a product A1. When the target product is A1, it is possible to calculate the total amount of carbon dioxide emitted in manufacturing activity until the product A1 is produced by integrating the $CO_2$ emission amount corresponding to the product A1 with the $CO_2$ emission amounts corresponding to products A11, A12, A13, A14 that are inclusion products.

An integrated value may be stored in the storage unit 12 in association with a product or may be included in part of product information. In other words, product information corresponding to the product A12 may hold both $E_{A12}$ that is the amount of emission in the process alone and $I_{A12}$ that is the amount of emission after integration.

Traceability-related information after integration is used again at the time of performing integration for a downstream product. When this process is executed at each level with the most upstream side as a starting point, traceability-related information (for example, an accumulated value of the $CO_2$ emission amount) is sequentially transferred in a downstream direction. Finally, the traceability-related information is transferred to an end product. As a result, traceability-related information corresponding to the entire period until the end product is produced (for example, the total amount of emission of $CO_2$) can be obtained.

In this way, when the information providing unit 114 generates information on a product tree, the information providing unit 114 may repeatedly execute a process of sequentially integrating traceability-related information defined for each piece of product information from the most upstream side toward the most downstream side. In the above-described example, the amount of emission of carbon dioxide is illustrated as a target of integration; however, traceability-related information that is a target of integration may be a recycling rate related to a predetermined raw material, a score for due diligence, or the like. When the traceability-related information is a numeric value, integration may be performed by mathematical operations. When the traceability-related information is information other than a numerical value (for example, due diligence-related information or the like), integration may be simple information collection.

In another example, product information may include information indicating a location of traceability-related information of a corresponding product (hereinafter, "location information"; typically, address, pointer, or the like). In this case, traceability-related information does not need to be included in product information. Integration may be to collect location information included in product information.

The information providing unit 114 may output a product tree generated in an image format. Simultaneously, the information providing unit 114 may output traceability-related information corresponding to a selected product.

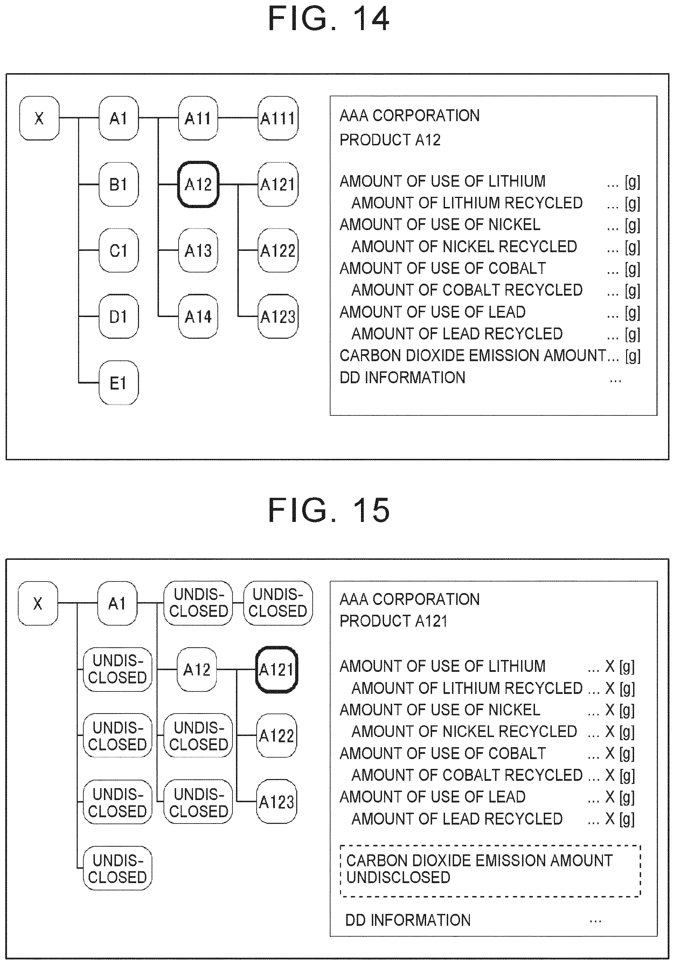

FIG. 14 is an example of a screen in which a product tree is output in form of an image. The illustrated screen contains an image representing a supply relationship among a plurality of products that make up an end product in a tree diagram. When a product is selected, traceability-related information corresponding to the product or an integration result of traceability-related information until the product is produced (for example, a total value of the amount of emission of carbon dioxide from the most upstream side) is allowed to be browsed. Such information can be output via the input/output device 14 of the server apparatus 1 based on an operation of an operator of the server apparatus 1.

Furthermore, the information providing unit 114 may provide a product tree generated to the company terminal 2 in response to a request from the company terminal 2 (information acquisition unit 214). It may be not adequate to disclose the entire product tree to a specific company. For this reason, when the information providing unit 114 provides a product tree to the company terminal 2 corresponding to a company, the information providing unit 114 may execute a process of not disclosing a range of which no access authority is given to the company.

For example, in the example of FIG. 13, it is assumed that the information providing unit 114 receives a request to disclose a product tree from the company terminal 2 corresponding to a company that produces the product A12. Here, it is assumed that authority to access only the products A121, A122, A123 is given to the company. In other words, the company cannot access product information other than the above three products and A1 that is a downstream product. In this case, the information providing unit 114 provides a product tree in which information on products of which no access authority is given is undisclosed, to the company terminal 2.

FIG. 15 is an example of a product tree in a case where products of which no access authority is given are undisclosed. In this example, a product tree is shown in a state where detailed information (or the presence) of the products that are undisclosed is confidential.

In a case where the presence of a product is disclosed but authority to access only a specific item in corresponding product information is not given, a confidential process is executed only on the specific item as indicated by the dashed line in the diagram. In the illustrated example, the fact that the amount of emission of carbon dioxide at the time of producing the product A121 is undisclosed is shown.

On the other hand, even when there is a product (or item) of which no access authority is given in a tree, the above-described integration of traceability-related information is performed without any influence. For example, in the illustrated example, the amount of emission of carbon dioxide for the product A121 is undisclosed; however, this does not influence the process of calculating the total amount of emission of carbon dioxide for the product A12.

Flow of Process

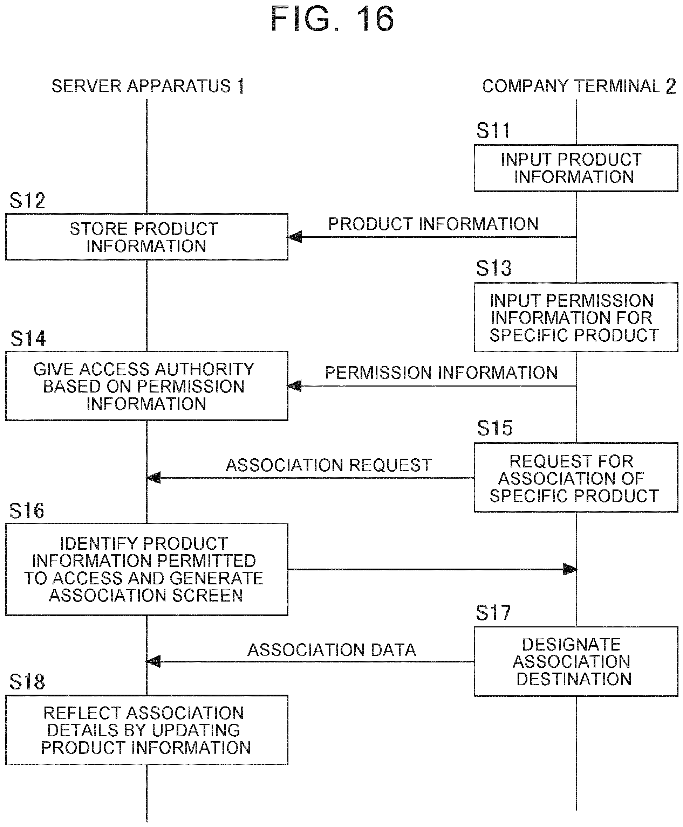

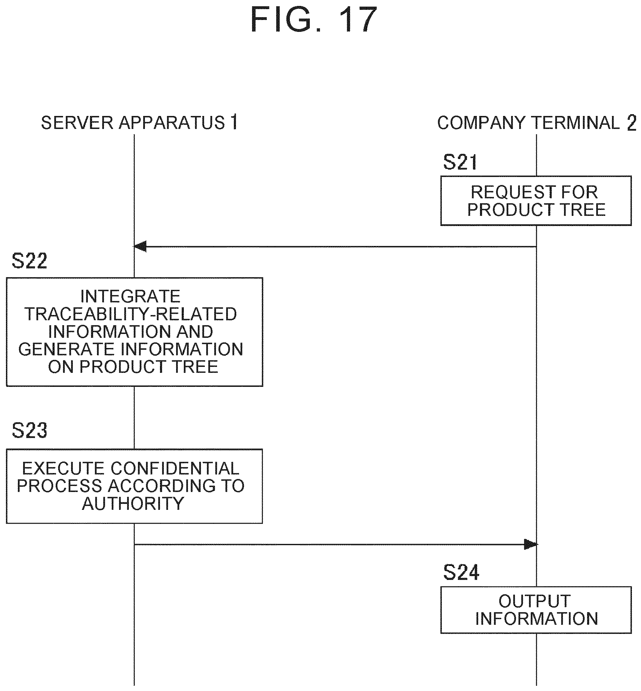

Next, the flow of a process executed by the server apparatus 1 and the company terminal 2 in a case where its own company's product information is registered by the company terminal 2 will be described with reference to FIG. 16 and FIG. 17. FIG. 16 is a sequence diagram corresponding to the first to third phases.

In an example, interaction between the server apparatus 1 and the company terminal 2 is started when the operator of each company logs onto the server apparatus 1 by using the corresponding account of the company via the company terminal 2. In this example, it is assumed that the operator of each company has logged onto the server apparatus 1 by using its own company's account.

Initially, in step S11, the product information generating unit 211 of the company terminal 2 acquires its own company's product information via the operator and sends the product information acquired to the server apparatus 1. The product information sent is received by the server apparatus 1 (information collecting unit 111) and stored in the storage unit 12 (step S 12). At this time, the information collecting unit 111 saves the product information in a storage area of which access authority is given to only the company that produces the corresponding product.

After that, in step S13, the authority setting unit 212 of the company terminal 2 receives, via the operator, input of information to designate a downstream company permitted to access (permission information) the product information sent in step S11. In this step, a user interface screen as described with reference to FIG. 9 may be provided, and a combination of a selected product with a downstream company permitted to access the product information may be allowed to be designated. The permission information input is sent to the server apparatus 1.

In step S14, the authority setting unit 112 of the server apparatus 1 gives authority to access target product information based on the permission information received. In this step, as described with reference to FIG. 12, the authority setting unit 112 gives authority to access selected product information to a selected company by copying the target product information to a storage area of which access authority is given to a plurality of companies. When there is no appropriate storage area of which access authority is given, the authority setting unit 112 may execute a process of generating a new storage area and giving access authority to an appropriate company.

Subsequently, in step S15, the association request unit 213 of the company terminal 2 sends data to make a request of the server apparatus 1 to associate the product information sent to the server apparatus 1 with an upstream product (association request). The association request includes its own company ID and a product ID of a target product.

In step S16, the server apparatus 1 (association unit 113) generates a list of product information permitted to access from a target company and provides the company terminal 2 with a user interface screen containing the list. In this step, the server apparatus 1 may provide a user interface screen as described with reference to FIG. 11 to the company terminal 2 and designate a combination of a selected product with an upstream product associated with the product.

In step S17, the association request unit 213 of the company terminal 2 receives from the operator a designated combination of a target product with an upstream product associated with the product. The association request unit 213 generates data indicating association of an upstream product with a downstream product (association data) and sends the association data generated to the server apparatus 1.

In step S18, the association unit 113 of the server apparatus 1 updates the product information stored based on the association data and reflects details of association of the pieces of product information with each other. Association of pieces of product information with each other may be performed by storing information (identifier, pointer, or the like) on an upstream product with association-related information of product information of a downstream product.

When there is no downstream company, processes of step S13 to step S14 may be omitted. Similarly, when there is no upstream company (when there is no destination of association for a target product), the association unit 113 may execute a process of setting the above-described termination flag instead of making a request to associate pieces of product information with each other. In this case, the processes of the above-described step S15 to step S18 are omitted.

FIG. 17 is a sequence diagram corresponding to the above-described fourth phase. Initially, in step S21, the information acquisition unit 214 of the company terminal 2 makes a request of the server apparatus 1 to provide a product tree. The request includes, for example, an identifier of a target product. The target product may be an end product or may be a product other than the end product (intermediate product).

The server apparatus 1 (information providing unit 114) having received the request generates information on a product tree through the above-described process (step S22). At this time, the information providing unit 114 executes a process of integrating traceability-related information defined for each piece of product information from the most upstream side toward the most downstream side. The result of integration may be reflected on each piece of product information.

Subsequently, in step S23, the server apparatus 1 executes a process of placing information, of which no access authority is given, in a confidential state based on the access authority of a target company. When, for example, the presence itself of product information of another company is not disclosed to a company, the server apparatus 1 may execute a process of placing the presence of the product information in a confidential state. When only a specific item included in product information is undisclosed, the server apparatus 1 may execute a process of placing the details of the item in a confidential state. Information on a product tree subjected to the confidential process is provided to the company terminal 2 (information acquisition unit 214) and output (step S24).

Details of Process of Registering Product Information of Upstream Company

The proxy input unit 115 of the server apparatus 1 is capable of acquiring and storing information on an upstream company from the company terminal 2 of a downstream company. Here, when a downstream company desires to associate its own company's product with an upstream product but the upstream product is not registered in the platform, it is not possible to perform the association. In the present embodiment, to deal with this situation, the proxy input unit 115 registers information on a product of a company that has not joined the supply chain based on a request from a company that has already joined the supply chain.

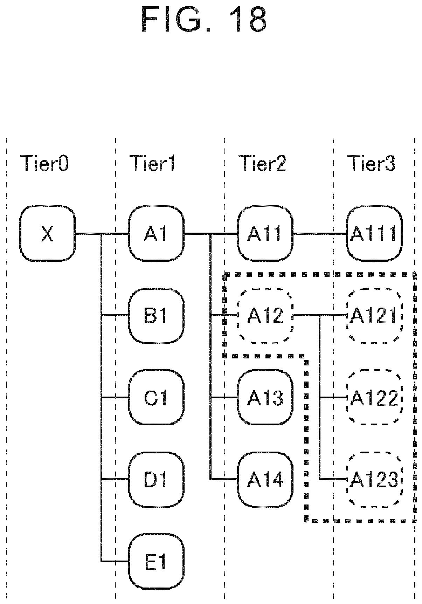

FIG. 18 is a diagram that illustrates an example of a relationship among products in a supply chain. The supply chain is formed in the platform. In FIG. 18, a supply relationship of a plurality of products that make up an end product X is represented by a tree diagram.

The product information of the product A1 is registered in the platform. On the other hand, the product information of the product A12 that is the upstream product of the product A1 is not registered in the platform. Hereinafter, the downstream-side product A1 is referred to as a first product A1, and the product A12 positioned at a level upstream by one from the first product A1 is referred to as a second product A12. The proxy input unit 115 of the server apparatus 1 accepts a request to register the second product A12 from the proxy application unit 215 of the company terminal 2 of a company that manufactures the first product A1. Hereinafter, a company that manufactures the first product A1 is referred to as a first company, and a company that manufactures the second product A12 is referred to as a second company. The second company is a company that has already joined the platform. The company terminal of the first company is referred to as a first company terminal 2A, and the company terminal of the second company is referred to as a second company terminal 2B.

The proxy application unit 215 of the first company terminal 2A makes a request of the server apparatus 1 to register the second company (target company) as a virtual company. The proxy application unit 215 of the first company terminal 2A makes a request of the server apparatus 1 to register the second product A12 in the platform. A request for registration of a virtual company and a request for registration of the second product A12 may be performed at the same time or may be performed at different timings. The proxy application unit 215 of the first company terminal 2A sends information on the second company to the server apparatus 1. The information on the second company includes information needed for registration of the virtual company and the second product A12. The information on the second company includes, for example, the name, address, contact information, and the like of the second company as information with which the second company can be identified. Information on the second product A12 includes traceability-related information as described with reference to FIG. 8. Hereinafter, the information on the second product A12 and the information on the second company are also referred to as second company information.

The proxy input unit 115 of the server apparatus 1 accepts registration of the second company as a virtual company from the first company terminal 2A. The proxy input unit 115 of the server apparatus 1 accepts registration of information on the second product A12 from the first company terminal 2A. When the proxy input unit 115 of the server apparatus 1 receives the second company information from the first company terminal 2A, the proxy input unit 115 registers the second company as a virtual company. The proxy input unit 115 allocates a storage area dedicated for the virtual company.

The proxy input unit 115 of the server apparatus 1 generates a temporary account in the platform for the second company. When the proxy input unit 115 of the server apparatus 1 generates a temporary account corresponding to the second company, the proxy input unit 115 stores account information in a database constructed in the storage unit 12. A temporary account, different from a regular account, is provided with limitations on using the functions of the platform. For example, access to product information of other companies with a temporary account may be disabled. For example, display of a product tree screen with a temporary account may be disabled. For example, only browsing or changing its own company's product information with a temporary account may be enabled.

The proxy input unit 115 of the server apparatus 1 stores the second product information in the storage unit 12 in response to reception of the second product information from the first company terminal 2A. The second product information is stored in association with the temporary account of the virtual company. Therefore, the first company does not need to be called to account for management of the information on the second product A12 registered by the proxy input unit 115 of the server apparatus 1. For example, the server apparatus 1 may hold contact information to the second company, and may make an inquiry of the second company, for example, at predetermined intervals to update information.

Not limited to this configuration, the second product information may be stored in the server apparatus 1 such that the fact that the second product information is registered in response to a request from the first company can be determined. For example, a company ID and a company name indicating that the first company is a proxy applicant and different from the company ID and company name of the first company may be respectively stored in the fields of the company ID and company name of the second product information. The proxy applicant means a company that submits an application for registration of information on a product, other than its own company's product. When, for example, the second product information is registered in response to a request from the first company, the first company may be registered as a proxy applicant on the assumption that the first company has submitted an application by proxy for registration of the second product information. The proxy applicant is not called to account for management of the second product information stored. In further another method, the company ID and the company name corresponding to the second company may be respectively input to the fields of the company ID and company name. In addition, fields for storing a company that submits proxy application may be provided, and the company ID and company name of the first company may be stored. In another method, the fields of company ID and company name may be blank, fields for storing a company that submits proxy application may be provided, and the company ID and company name of the first company may be stored.

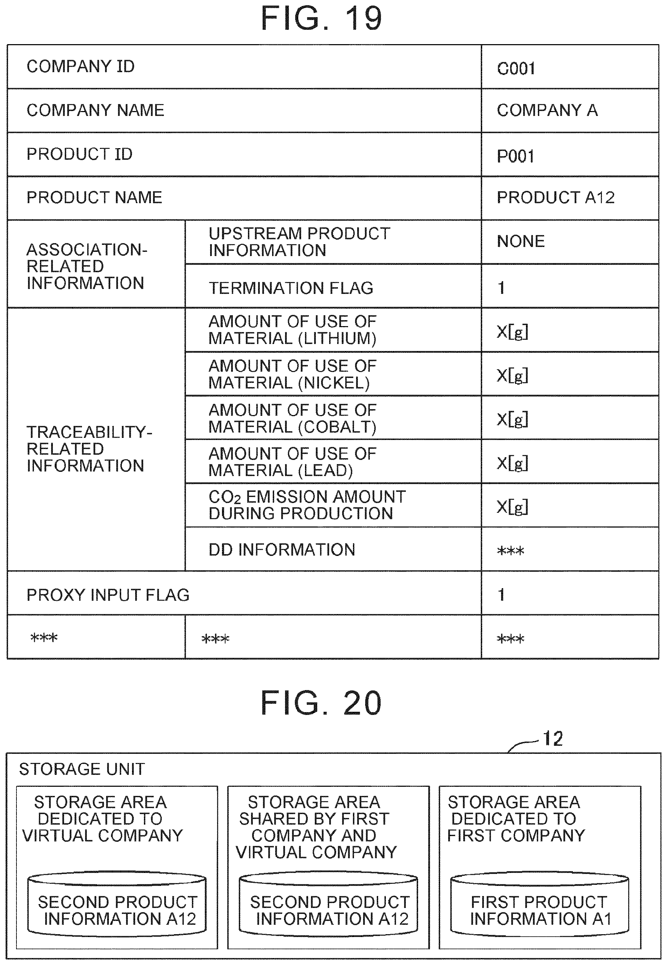

To identify product information registered in response to a request from the first company, the product information stored in the server apparatus 1 may be configured to have a proxy input flag field. FIG. 19 is a table that shows an example of product information generated by the information collecting unit 111 or the proxy input unit 115. The proxy input flag field is used to determine product information registered by the server apparatus 1. "1" is stored in the proxy input flag field in a case of being registered in response to a request from a company of a downstream product, and "0" is stored in the proxy input flag field in a case of being registered in response to a request from its own company. Therefore, when first product information acquired from the first company terminal 2A is stored in the storage unit 12, "0" is stored in the proxy input flag field by the information collecting unit 111. When second product information acquired from the first company terminal 2A is stored in the storage unit 12, "1" is stored in the proxy input flag field by the proxy input unit 115.

The proxy input unit 115 of the server apparatus 1 gives authority to access the second product information, to the first company. FIG. 20 is a diagram that shows an example of a case where a storage area corresponding to a virtual company is generated in the storage unit 12. As described with reference to FIG. 12, the proxy input unit 115 of the server apparatus 1 gives authority to access the second product information, to the first company, by copying the second product information to a storage area (a storage area shared by the first company and the virtual company) of which access authority is given to the first company. For example, the proxy input unit 115 of the server apparatus 1 stores the identification information of the second product A12 in the upstream product information field in the product information of the first product A1. Authority to access the second product information may be given to only the first company. In this way, a storage area corresponding to the virtual company may be allocated.

Even when the second product A12 is registered in the first platform, it may be difficult to register further upstream products A121, A122, A123 in the first platform. For example, the products A121, A122, A123 cannot be seen from the first company of the first product A1. In this case, the first company cannot submit proxy application to register the products A121, A122, A123. Since the second company also has not joined to the first platform, the second company cannot submit proxy application to register the products A121, A122, A123. Therefore, "1" is set for the termination flag of the second product information of the second product A12. The products A121, A122, A123 become black boxes in the product tree. When the $CO_2$ emission amount $I_{A12}$ integrated for the second product A12 is stored as the second product information, it is possible to ensure traceability.

The proxy input unit 115 of the server apparatus 1 stores the second product information in the storage unit 12 of the server apparatus 1 and then sends communication that the second product information is registered, to the second company terminal 2B. The communication may include a request to seek confirmation as to whether there is an error in the traceability-related information. The communication may include information on a temporary account generated for the second company. The communication may be communication using e-mail or the like via a network. In another method, the communication may be communication by way of mail. The destination at the time of sending communication may be included in the second company information input by the downstream company. In another method, the proxy input unit 115 may make a request of the first company to contact the second company.

An operator of the second company terminal 2B logs onto the server apparatus 1 from the second company terminal 2B by using a temporary account and checks product information of the second product that is its own company's product. The proxy application unit 215 of the second company terminal 2B acquires an answer input by the operator and sends the answer to the server apparatus 1. When there is an error in the product information, information for correcting the product information may be included in the answer.

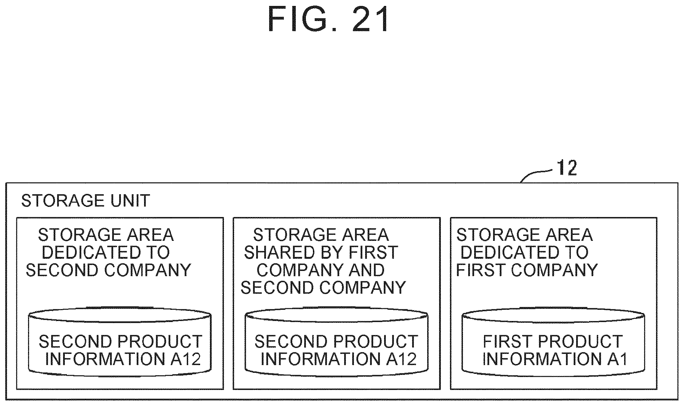

Communication to the second company may include communication prompting the second company to join the platform. When the second company joins the platform, the second company terminal 2B sends a joining request to the server apparatus 1. The joining request includes information about joining of the second company in the platform. The proxy input unit 115 of the server apparatus 1, having received the joining request generates a regular account corresponding to the second company. The storage area corresponding to the second product information and allocated to the virtual company is allocated to the second company. FIG. 21 is a diagram that shows an example of a storage area at the time when the storage area allocated to the virtual company is allocated to the second company. The storage area having been allocated to the virtual company is allocated to the second company, so time and effort to newly input the second product information is saved.

Flow of Process

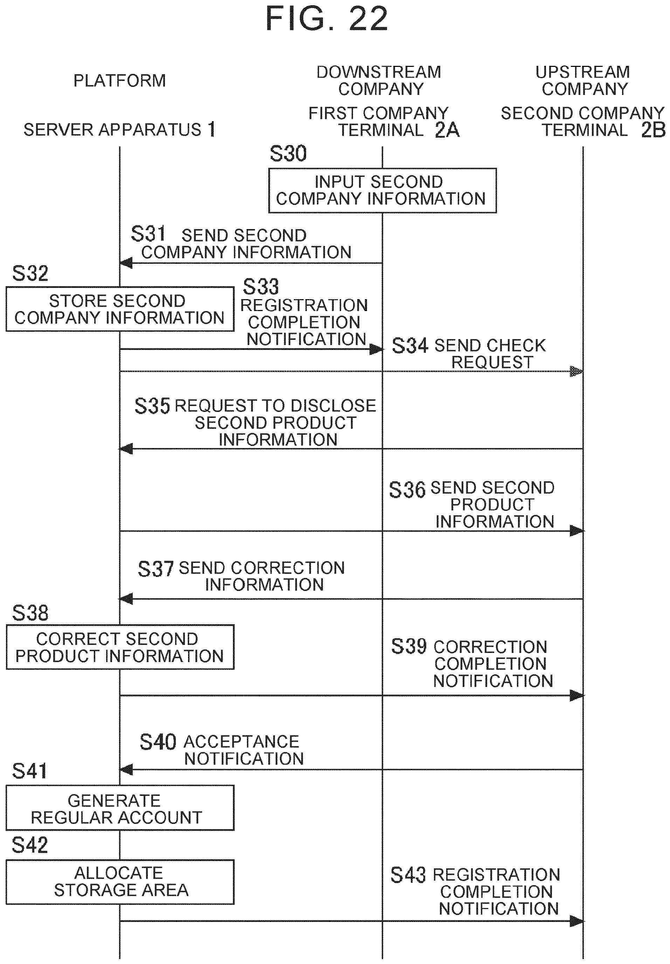

FIG. 22 is a sequence diagram that shows an example of the flow of a process in which the server apparatus 1 registers second product information. In an example of the present embodiment, it is assumed that interaction between the server apparatus 1 and the company terminal 2 is started when the operator of each company logs onto the server apparatus 1 by using the corresponding account of the company via the company terminal 2. In the example shown in FIG. 22, it is assumed that the operator of the first company has logged onto the server apparatus 1 by using its own company's account. In addition, it is also assumed that first product information is already stored in the server apparatus 1.

When the operator of the first company desires to register the second product information in the server apparatus 1, the operator of the first company inputs second company information to the first company terminal 2A (step S30). The second company information includes information on the second company and information on the second product. When input of the second company information completes, the proxy application unit 215 of the first company terminal 2A sends the second company information to the server apparatus 1 (step S31).

The second company information sent is received by the proxy input unit 115 of the server apparatus 1 and is stored in the storage unit 12 (step S32). The proxy input unit 115 of the server apparatus 1 stores the second product information in the storage unit 12 in association with the first company. At this time, the proxy input unit 115 generates a proxy input flag field and stores "1" in the proxy input flag field. The proxy input unit 115 of the server apparatus 1 gives authority to access the second product information, to the first company. The proxy input unit 115 copies the second product information to a storage area of which access authority is given to the first company.

When the second company information is stored in the storage unit 12, the proxy input unit 115 of the server apparatus 1 sends registration completion notification to the first company terminal 2A (step S33). Registration completion notification is notification indicating that registration of the second company information is complete.

When the second company information is stored in the storage unit 12, the proxy input unit 115 of the server apparatus 1 sends a check request to the second company terminal 2B (step S34). The check request is a request to check registration details. The check request is received by the proxy application unit 215 of the second company terminal 2B. The check request includes information on a temporary account for logging onto the server apparatus 1, a uniform resource identifier (URI), and the like. The proxy application unit 215 of the second company terminal 2B makes a request of the server apparatus 1 to disclose second product information by using the temporary account (step S35). In response to this request, the proxy input unit 115 of the server apparatus 1 sends the second product information corresponding to the temporary account to the second company terminal 2B (step S36).

The second product information is received by the proxy application unit 215 of the second company terminal 2B. The proxy application unit 215 of the second company terminal 2B causes the input/output device 24 to display a screen corresponding to the second product information (for example, a screen corresponding to traceability-related information). The operator checks whether there is an error by viewing the screen. When there is an error, the proxy application unit 215 of the second company terminal 2B accepts input of correction information from the operator. The proxy application unit 215 of the second company terminal 2B sends the correction information to the server apparatus 1 (step S37). When there is no error, the proxy application unit 215 may send notification of that effect to the server apparatus 1 or does not need to send notification. The proxy input unit 115 of the server apparatus 1 accepts input of the correction information and corrects the second product information (step S38). When correction completes, the proxy input unit 115 of the server apparatus 1 updates the second product information. The proxy input unit 115 of the server apparatus 1 sends correction completion notification to the second company terminal 2B (step S39). Correction completion notification is notification indicating that correction of the second product information is complete.

The check request that the proxy input unit 115 of the server apparatus 1 sends to the second company terminal 2B in step S34 includes a request to join the platform. When the operator of the second company terminal 2B accepts the request to join, the operator inputs information on acceptance of joining via the input/output device 24 of the second company terminal 2B. In response to this input, the proxy application unit 215 of the second company terminal 2B sends acceptance notification to the server apparatus 1 (step S40). Acceptance notification is notification indicating that joining the platform is accepted.

The acceptance notification is received by the proxy input unit 115 of the server apparatus 1. The proxy input unit 115 of the server apparatus 1, having received the acceptance notification, generates a regular account corresponding to the second company (step S41). Furthermore, the proxy input unit 115 of the server apparatus 1 allocates a storage area in association with the regular account of the second company. The storage area is a storage area where the second product information is stored in step S32. Thus, time and effort that the operator of the second company inputs the second product information again is saved. The proxy input unit 115 of the server apparatus 1 sends the registration completion notification to the second company terminal 2B (step S43).

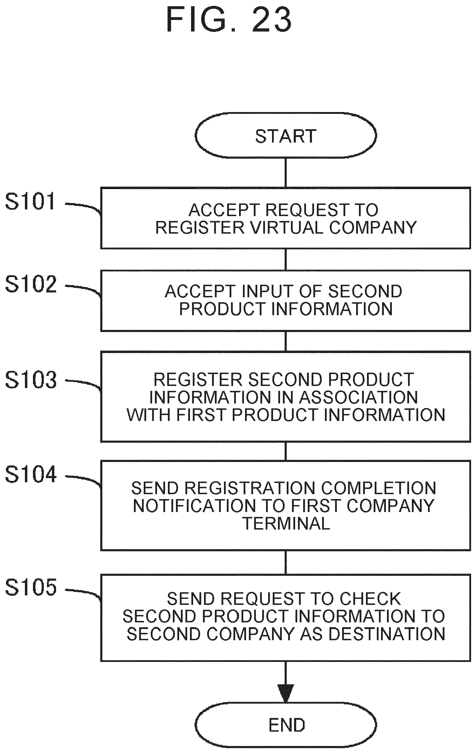

Next, a process in the server apparatus 1 will be described in detail with reference to FIG. 23. FIG. 23 is a flowchart that shows an example of the flow of a process of registering a second product A12, executed in the server apparatus 1. The routine is executed when there is a request to register a virtual company from the company terminal 2. Description will be made on the assumption that the first product information is already stored in the server apparatus 1.

In step S101, the proxy input unit 115 accepts a request to register a virtual company from the first company terminal 2A. The registration request includes a request to register the second company as a virtual company. In response to a request to register a virtual company, the proxy input unit 115 generates a temporary account for the virtual company. Information on the second company is stored in the storage unit 12 in association with the virtual company. In step S 102, the proxy input unit 115 accepts input of the second product information. The second product information is sent from the first company terminal 2A. The proxy input unit 115 accepts input of the second product information by acquiring the second product information from the first company terminal 2A. In another example, the order of step S 101 and step S 102 may be reversed. Further in another example, the server apparatus 1 may accept, at the same time, a request to register a virtual company and input of second product information as second company information from the first company terminal 2A (that is, step S101 and step S102 may be executed at the same time). For example, these pieces of information may be allowed to be input on one webpage.

In step S103, the proxy input unit 115 registers the second product information in association with the first product information. The proxy input unit 115 registers the first product information and the second product information in association with each other by storing information with which the second product is identified, in the upstream product information field of the first product information. In step S 104, the proxy input unit 115 sends registration completion notification to the first company terminal 2A.

In step S 105, the proxy input unit 115 sends a check request for the second product information to the second company as a destination. The proxy input unit 115 sends a check request to the second company terminal 2B by using, for example, e-mail. The check request includes a request to check registration details of the second product information. The check request may include a request to check whether there is an error in traceability-related information. The check request may include information on a temporary account. The check request may include a request to join the platform. In another method, notification indicating that the second product information is registered may be sent. In another method, the proxy input unit 115 may output printed matter so that the above-described notification or request is sent to the second company as a destination. The order of step S103, step S104, and step S105 may be selectively changed. A process of at least some of step S 103, step S 104, and step S 105 may be executed in parallel.

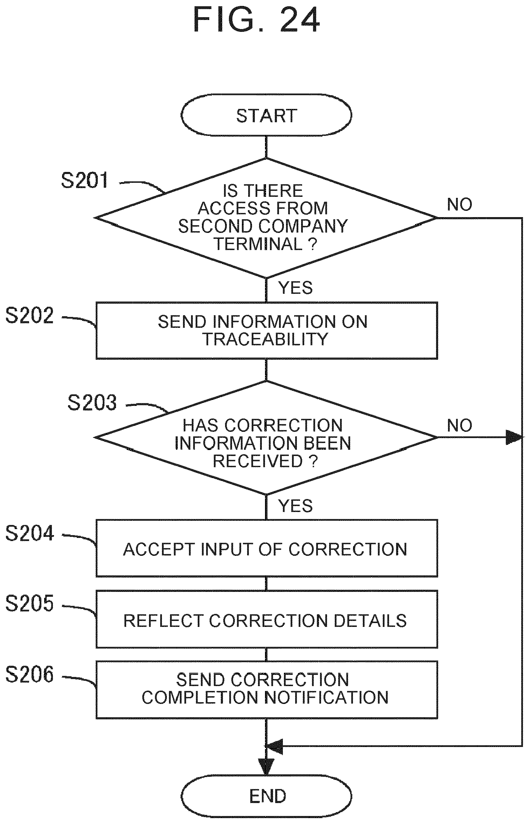

FIG. 24 is a flowchart that shows an example of the flow of a process of correcting product information of the second product A12, executed in the server apparatus 1. The routine is executed at intervals of a predetermined period of time in the server apparatus 1. Description will be made on the assumption that the routine shown in FIG. 23 has been already executed and the second product information is stored in the storage unit 12.

In step S201, the proxy input unit 115 determines whether there is access from the second company terminal 2B. When the proxy input unit 115 receives a request to disclose the second product information from the second company terminal 2B, the proxy input unit 115 determines that there is access from the second company terminal 2B. When the determination is affirmative in step S201, the process proceeds to step S202; whereas, when the determination is negative in step S201, the routine ends.

In step S202, the proxy input unit 115 sends the second product information including information on traceability to the second company terminal 2B. In step S203, the proxy input unit 115 determines whether correction information has been received from the second company terminal 2B. In other words, the proxy input unit 115 acquires information indicating that there is an error in the second product information from the second company terminal 2B. When there is no error in the second product information, the proxy input unit 115 may receive information of that effect. When the determination is affirmative in step S203, the process proceeds to step S204; whereas, when the determination is negative in step S203, the routine ends.

In step S204, the proxy input unit 115 accepts input of correction from the second company terminal 2B. Correction details may be included in correction information. In this case, the proxy input unit 115 accepts input of correction according to the correction information. In step S205, the proxy input unit 115 reflects correction of the second product information. The proxy input unit 115 may, for example, reflect correction by overwriting the second product information. In another method, correction of the second product information may be reflected by separately saving corrected second product information. In step S206, the proxy input unit 115 sends correction completion notification to the second company terminal 2B. The process of step S206 may be omitted.

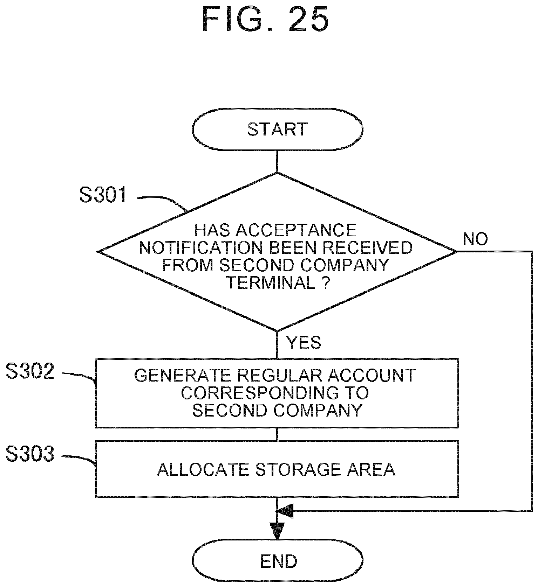

FIG. 25 is a flowchart that shows an example of the flow of a process of registering product information of the second product A12 as a product of the second company, executed in the server apparatus 1. The routine is executed at intervals of a predetermined period of time in the server apparatus 1. Description will be made on the assumption that the routine shown in FIG. 23 has been already executed and the second product information is stored in the storage unit 12.

In step S301, the proxy input unit 115 determines whether notification on acceptance of joining the platform (acceptance notification) has been received from the second company terminal 2B. When the determination is affirmative in step S301, the process proceeds to step S302; whereas, when the determination is negative in step S301, the routine ends. In step S302, the proxy input unit 115 generates a regular account corresponding to the second company. The proxy input unit 115 may treat a temporary account corresponding to the second company as a regular account. In step S303, the proxy input unit 115 allocates the storage area, which has been allocated to the virtual company, to the regular account generated in step S302. In other words, the proxy input unit 115 causes the second company to take over the storage area corresponding to the virtual company.

As described above, in the present embodiment, in the system that generates a product tree by collecting product information from the company terminals 2, it is possible to store upstream-side second company information in the platform in response to a request from the downstream-side first company terminal 2A. With this configuration, even before the second company joins the platform, it is possible to ensure traceability. For the second company, the second product information is already registered, so it is easy to join the platform. In the server apparatus 1 as well, it is possible to omit a process of newly registering the second product information. Thus, it is easy to manage the storage area.

Other Embodiments

The above-described embodiments are only illustrative, and the disclosure can be implemented with modifications as needed without departing from the purport of the disclosure. For example, the processes and devices described in this disclosure may be freely implemented in combination without any technical contradiction.

In the description of the embodiments, the server apparatus 1 stores product information in the database. Alternatively, product information may be stored by a device other than a database.

In the description of the embodiments, a mode in which a product tree is completed when the server apparatus 1 executes the first to fourth phases has been illustrated. Alternatively, a role of the server apparatus 1 may be distributed to the company terminals 2. For example, product information may be stored by a distributed database using a blockchain platform. In this case, a product information database may be made up of the company terminals 2. In this case, the above-described processes of the phases may be executed by using smart contract. For example, on condition that the account of a company writes permission information to a database, a process in the second phase may be executed. On condition that the account of a company writes an association request to the database, a process in the third phase may be executed.

In the description of the embodiments, the phase in which the server apparatus 1 receives product information on an upstream product and the phase in which the server apparatus 1 receives permission information corresponding to the product information have been described separately; however, both may be received at the same time. Similarly, in the description of the embodiments, the phase in which the server apparatus 1 receives product information on a downstream product and the phase in which the server apparatus 1 receives an association request corresponding to the product information have been described separately; however, both may be received at the same time.

In the description of the embodiments, the platform is provided by the server apparatus 1; however, the configuration is not limited thereto. For example, the server apparatus 1 may be a server independent of the platform and provides the platform with information obtained from the company terminal 2.

In the above-described embodiments, access control of each company is implemented by providing a dedicated storage area and a shared storage area. However, a method of implementing access control is not limited to such an example. A selected method may be used for access control.

In the above-described embodiments (FIG. 1), a plurality of companies included in a supply chain has been described as companies that produce products. However, companies included in a supply chain do not necessarily need to be companies that produce products. For example, companies that perform transport, import, storage, wholesale, and the like of products may be included in companies that make up a supply chain. In an example, some companies of a plurality of companies may be, for example, companies that do not execute a manufacturing process, such as a trading company, a distributing agent, and an import agent, or may receive products from a company at a level upstream by one (upstream company) and supplies products to a company at a level downstream by one (downstream company).

In the above-described embodiments, a supply chain of products relevant to automobiles have been assumed, an OEM maker has been described as the most downstream company, and a company that supplies parts, materials, assemblies, and the like has been described as a supplier. However, companies that belong to a supply chain are not necessarily limited to these. Companies in each phase may be determined as needed according to products and the like. Manufacturing activities performed in each company by the time an end product is obtained may be determined as needed according to an embodiment and may, for example, include all the activities that can be performed by the time an end product is obtained, such as excavation, working, assembling, conveyance, and storage.

In the above-described embodiments, the server apparatus 1 is configured to execute information processing of the first to fourth phases. However, the configuration of the server apparatus 1 does not need to be limited to such an example. In an example, in the server apparatus 1, information processing in at least one or some of the first to fourth phases may be omitted. The server apparatus 1 may be configured to execute other selected information processing.

In the above-described embodiments, an example of calculation of the $CO_2$ emission amount (CFP value) has been described. A CFP value may be calculated by using the following calculation formula.

$$\text{(CFP value of TierN}-1) = \text{(Own company measured CFP value of TierN}-1) + \Sigma_k \text{(CFP value of k company (TierN)} \times \text{Amount of use } u_k \text{ in TierN}-1)$$

Here, "CFP value of TierN-1" indicates a result obtained by integrating a CFP value of an upstream company (k company (TierN)) with its own company's CFP value. The own company measured CFP value indicates a CFP value included in product information of each company. When TierN is the most upstream company, "CFP value of TierN" is a CFP value included in product information of the company; whereas, in other cases, "CFP value of TierN" is a result obtained by integrating a CFP value of a further upstream company (TierN+1) with a CFP value included in product information of the company. A CFP value of a Tier0 product (= end product) can be obtained by setting TierN for the most upstream company (termination company) and repeating calculation up to N = 1.

In the above-described embodiments, the server apparatus 1 may execute computation of recycling rate and due diligence (score) in addition to or instead of calculation of the $CO_2$ emission amount (CFP value). The recycling rate may be calculated by using the following calculation formula.

$$\text{(Recycling rate at TierN}-1 \text{ product for a target substance)} = \{\text{(Total amount of use in TierN}-1) \times \text{(Recycling rate in TierN}-1) + \Sigma_k((\text{Total amount of use in k company (TierN)}) \times (\text{Recycling rate in k company (TierN)}) \times (\text{Amount of use } u_k \text{ in TierN}-1))\} \div \{\text{(Total amount of use in TierN}-1) + \Sigma_k((\text{Total amount of use in k company (TierN)}) \times (\text{Amount of use } u_k \text{ in TierN}-1))\} = \{\text{(Recycled material usage amount in TierN}-1) + \Sigma k((\text{Recycled material usage amount in k company (TierN)}) \times (\text{Amount of use } u_k \text{ in TierN}-1)\} \div \{\text{(Total amount of use in TierN}-1) + \Sigma k((\text{Total amount of use in k company (TierN)}) \times (\text{Amount of use } u_k \text{ in TierN}-1))\}$$

A recycled material usage amount indicates the amount of use of a recycled material of a target substance. As in the case of CFP value, a recycling rate at an end product for a target substance can be calculated by sequentially calculating from the most upstream company (termination company). A due diligence score (DD score) can also be integrated with similar computation to those of the CFP value and the recycling rate. In an example, a DD score (integrated result) at an end product can be obtained by replacing the CFP value with a DD score and sequentially calculating from the most upstream company (termination company).

In the above-described embodiments, traceability-related information of each company (TierN-1) itself except the most upstream company does not need to be stored in a shared storage area with its own downstream company, and an integrated result (the CFP value of TierN-1 and the recycling rate at TierN-1 product for a target substance) of each company may be stored in a shared storage area between the company and a downstream company (TierN-2) of the company. Thus, traceability-related information (integrated result) at an end product can be obtained without disclosing its own company's traceability-related information.

In the above-described embodiments, it is assumed that each company places an order with one company for a material. However, in the above-described embodiments, an order form of each company does not need to be limited to such an example. At least some of companies that belong to a supply chain may place an order with a plurality of upstream companies for the same product and selectively use the obtained upstream products for its own company's product. For example, in the example of FIG. 13, a product A11_1, a product A11_2, or a product A11_3 of Tier2 may be selectively used for the product A1 of Tier1. In this case, the server apparatus 1 may hold an association relationship for each pattern used. In the above example, the server apparatus 1 may hold association information for the product A1 of Tier1 like pattern 1 "product A11_1, ..., of Tier2", pattern 2 "product A11_2, ...", and pattern 3 "product A11_3, ...". Accordingly, the server apparatus 1 may execute computation (integration) of the traceability-related information for each pattern. In this case, in an example, the server apparatus 1 may output a computation result for each pattern. In another example, the server apparatus 1 may calculate a statistic, such as a maximum value, a minimum value, a mean value, a variance, a standard deviation, and a median value, of computation results from the computation results and output the calculated static.

In the above-described embodiments, traceability-related information (particularly, CFP value) may be composed of primary data or may be composed of secondary data (inventory data). Primary data are measurement values, and secondary data are reference values used when no measurement value is obtained. In this case, computation (integration) of the traceability-related information may include calculating the ratio of primary data of traceability-related information obtained for an end product. The ratio of primary data may be calculated by simple ratio calculation or may be calculated by weighted calculation performed by replacing the CFP value with the ratio of primary data of each company in the calculation formula of the CFP value and sequentially calculating from the most upstream company.

A process described as the one that is performed by a device may be shared and performed by multiple devices. Alternatively, processes described as the ones that are respectively performed by different devices may be performed by a device. In a computer system, what hardware configuration (server configuration) implements functions may be flexibly changed.

The disclosure may also be implemented as follows. A computer is supplied with a computer program having the functions described in the above-described embodiments, and one or more processors of the computer read out and run the program. Such a computer program may be provided to a computer with a non-transitory computer-readable storage medium (non-transitory storage medium) connectable to a system bus of the computer or may be provided to a computer via a network. Examples of the non-transitory storage medium include a disk or disc of any type, such as a magnetic disk (floppy (registered trademark) disk, a hard disk drive (HDD), or the like), an optical disc (CD-ROM, DVD disc, a Blue-ray disc, or the like), a read only memory (ROM), a random access memory (RAM), an EPROM, an EEPROM, a magnetic card, a flash memory, an optical card, and a medium of any type suitable for storing electronic instructions.

**Claims**

1. An information processing apparatus (1) comprising a control unit (11), wherein the control unit (11) is configured to execute:

   accepting registration of a target company as a virtual company from an account of a downstream company positioned downstream of the target company in a supply chain;
   accepting input of information on a target product of the target company, included in a product of the downstream company, from the account of the downstream company;
   registering the input information on the target product in association with information on the product of the downstream company; and
   sending communication on the information on the target product to the target company as a destination.

2. The information processing apparatus (1) according to claim 1, wherein the information on the target product includes traceability-related information of the target product.

3. The information processing apparatus (1) according to claim 2, wherein the traceability-related information includes information on at least one of an amount of emission of greenhouse effect gas, a recycling rate, and a due diligence.

4. The information processing apparatus (1) according to claim 2 or 3, wherein the communication sent includes a request to seek confirmation as to whether there is an error in the traceability-related information.

5. The information processing apparatus (1) according to any one of claims 1 to 4, wherein the communication sent includes a request to join a platform.

6. The information processing apparatus (1) according to claim 5, wherein the control unit (11) is further configured to execute:

   creating an account corresponding to the target company in response to acquisition of notification of acceptance of joining the platform from the target company; and
   allocating a storage area including the information on the target product to the account created.

7. The information processing apparatus (1) according to any one of claims 1 to 6, wherein the product of the target company is a product related to a battery.

8. A computer-implemented information processing method, the information processing method comprising:

   accepting registration of a target company as a virtual company from an account of a downstream company positioned downstream of the target company in a supply chain;
   accepting input of information on a target product of the target company, included in a product of the downstream company, from the account of the downstream company;
registering the input information on the target product in association with information on the product of the downstream company; and
sending communication on the information on the target product to the target company as a destination.

9. The information processing method according to claim 8, wherein the information on the target product includes traceability-related information of the target product.

10. The information processing method according to claim 9, wherein the traceability-related information includes information on at least one of an amount of emission of greenhouse effect gas, a recycling rate, and a due diligence.

11. The information processing method according to claim 9 or 10, wherein the communication sent includes a request to seek confirmation as to whether there is an error in the traceability-related information.

12. The information processing method according to any one of claims 8 to 11, wherein the communication sent includes a request to join a platform.

13. The information processing method according to claim 12, further comprising:

creating an account corresponding to the target company in response to acquisition of notification of acceptance of joining the platform from the target company; and
allocating a storage area including the information on the target product to the account created.

14. The information processing method according to any one of claims 8 to 13, wherein the product of the target company is a product related to a battery.

15. A non-transitory storage medium storing instructions that are executable on one or more processors and that cause the one or more processors to execute functions, the functions comprising:

accepting registration of a target company as a virtual company from an account of a downstream company positioned downstream of the target company in a supply chain;
accepting input of information on a target product of the target company, included in a product of the downstream company, from the account of the downstream company;
registering the input information on the target product in association with information on the product of the downstream company; and
sending communication on the information on the target product to the target company as a destination.

# FIG. 1

OEM COMPANY
(Tier0)

COMPANY A
(Tier1)

COMPANY B
(Tier2)

COMPANY C
(Tier3)

SUPPLY          SUPPLY          SUPPLY

DOWNSTREAM ◁================▷ UPSTREAM

# FIG. 2

| Tier0 | Tier1 | Tier2 | Tier3 |
|-------|-------|-------|-------|
| X | A1 | A11 | A111 |
|  | B1 | A12 | A121 |
|  | C1 | A13 | A122 |
|  | D1 | *** | A123 |
|  | *** |  |  |

# FIG. 3

SERVER APPARATUS

PRODUCT INFORMATION A

PRODUCT INFORMATION B

PRODUCT INFORMATION C

4. GENERATE PRODUCT TREE BY ASSOCIATING PIECES OF PRODUCT INFORMATION WITH EACH OTHER BASED ON ASSOCIATION INFORMATION

1. SEND INFORMATION (PARTS INFORMATION) ON PRODUCT MANUFACTURED BY ITS OWN COMPANY

3. SELECT PRODUCTS ASSOCIATED WITH ITS OWN COMPANY'S PRODUCT FROM AMONG PRODUCTS PERMITTED TO ACCESS BY SENDING ASSOCIATION REQUEST

2. SEND INFORMATION (PERMISSION INFORMATION) INDICATING ACCESS PERMISSION FROM DOWNSTREAM COMPANY TO ITS OWN COMPANY'S PRODUCT INFORMATION

COMPANY TERMINAL

PRODUCT INFORMATION A

COMPANY TERMINAL

PRODUCT INFORMATION B

PERMISSION INFORMATION

COMPANY A (Tier N) THAT PRODUCES DOWNSTREAM PRODUCT A

COMPANY B (Tier N+1) THAT PRODUCES UPSTREAM PRODUCT B

DOWNSTREAM ◁——————————————————◁ UPSTREAM

# FIG. 4

```
                                                              ⌒1
┌──────────────────────────────────────────────────────────────────┐
│ SERVER APPARATUS                                                   │
│                                    ⌒11                  ⌒12         │
│   ┌──────────────────────┐    ┌──────────────────────────────┐    │
│   │   CONTROL UNIT        │    │        STORAGE UNIT          │    │
│   │  ┌────────────────┐   │    │   ┌──────────────────────┐   │    │
│   │  │     CPU        │   │────│   │      PROGRAM         │   │    │
│   │  └────────────────┘   │    │   └──────────────────────┘   │    │
│   │  ┌────────────────┐   │    │   ┌──────────────────────┐   │    │
│   │  │     RAM        │   │    │   │      PRODUCT         │   │    │
│   │  └────────────────┘   │    │   │    INFORMATION       │   │    │
│   │  ┌────────────────┐   │    │   └──────────────────────┘   │    │
│   │  │     ROM        │   │    │   ┌──────────────────────┐   │    │
│   │  └────────────────┘   │    │   │      ACCOUNT         │   │    │
│   └──────────────────────┘    │   │    INFORMATION       │   │    │
│                               │   └──────────────────────┘   │    │
│                               └──────────────────────────────┘    │
│                                                        ⌒13         │
│                               ┌──────────────────────────────┐    │
│                               │   COMMUNICATION MODULE        │    │
│                               └──────────────────────────────┘    │
│                                                        ⌒14         │
│                               ┌──────────────────────────────┐    │
│                               │   INPUT/OUTPUT DEVICE         │    │
│                               └──────────────────────────────┘    │
│                                                                    │
└──────────────────────────────────────────────────────────────────┘
```

# FIG. 5

COMPANY TERMINAL — 2

CONTROL UNIT — 21

CPU

RAM

ROM

STORAGE UNIT — 22

PROGRAM

COMMUNICATION MODULE — 23

INPUT/OUTPUT DEVICE — 24

# FIG. 6

SERVER APPARATUS — 1

CONTROL UNIT — 11

INFORMATION COLLECTING UNIT — 111

AUTHORITY SETTING UNIT — 112

ASSOCIATION UNIT — 113

INFORMATION PROVIDING UNIT — 114

PROXY INPUT UNIT — 115

STORAGE UNIT — 12

ACCOUNT INFORMATION

STORAGE AREA

PRODUCT INFORMATION

STORAGE AREA

PRODUCT INFORMATION

STORAGE AREA

# FIG. 7

2

COMPANY TERMINAL

21

CONTROL UNIT

211

PRODUCT INFORMATION
GENERATING UNIT

212

AUTHORITY SETTING UNIT

213

ASSOCIATION REQUEST UNIT

214

INFORMATION
ACQUISITION UNIT

215

PROXY APPLICATION UNIT

# FIG. 8

| COMPANY ID | | C001 |
|---|---|---|
| COMPANY NAME | | COMPANY A |
| PRODUCT ID | | P001 |
| PRODUCT NAME | | PRODUCT A |
| ASSOCIATION-RELATED INFORMATION | UPSTREAM PRODUCT INFORMATION | (NOT ASSOCIATED) |
| | TERMINATION FLAG | (NOT SET) |
| TRACEABILITY-RELATED INFORMATION | AMOUNT OF USE OF MATERIAL (LITHIUM) | X[g] |
| | AMOUNT OF USE OF MATERIAL (NICKEL) | X[g] |
| | AMOUNT OF USE OF MATERIAL (COBALT) | X[g] |
| | AMOUNT OF USE OF MATERIAL (LEAD) | X[g] |
| | $CO_2$ EMISSION AMOUNT DURING PRODUCTION | X[g] |
| | DD INFORMATION | *** |
| *** | *** | *** |

# FIG. 9

REGISTER PRODUCT / SET DISCLOSURE DESTINATION

PRODUCT PART NUMBER  [ P0001 ]

SET PERMITTED COMPANY

☐ A CORPORATION
☐ B CORPORATION
☑ C CORPORATION
☐ D CORPORATION
☐ E CORPORATION
☐ F CORPORATION

PERMITTED ITEM

☑ COMPANY NAME
☑ OWN COMPANY'S PART NUMBER
☑ PARTNER'S PART NUMBER
☑ FOR REQUIRED
☑ EMISSION FACTOR
☑ ***

# FIG. 10

PERMISSION INFORMATION GENERATED BY COMPANY TERMINAL

| | |
|---|---|
| COMPANY ID | C001 |
| PRODUCT ID | P001 |
| COMPANY ID PERMITTED TO ACCESS | *** |
| ITEM NAME PERMITTED TO ACCESS | *** |

# FIG. 11

REGISTER PRODUCT / SET ASSOCIATION DESTINATION

PRODUCT PART NUMBER: P00001

UPSTREAM COMPANY
- ☐ A CORPORATION
- ☐ B CORPORATION
- ☑ C CORPORATION
- ☐ D CORPORATION
- ☐ E CORPORATION
- ☐ F CORPORATION

UPSTREAM PRODUCT
- ☑ P10001
- ☑ P10002
- ☑ P10003
- ☑ P10004
- ☑ P10005
- ☑ ***

☐ THIS PRODUCT IS TERMINATION OF TREE (NO ASSOCIATION DESTINATION)

# FIG. 12

PRODUCT
INFORMATION A OF
COMPANY A

PRODUCT
INFORMATION B OF
COMPANY B

111

INFORMATION
COLLECTING UNIT

STORAGE AREA B
DEDICATED TO
COMPANY B

PRODUCT
INFORMATION B

STORAGE AREA AB
SHARED BY COMPANY A
AND COMPANY B

PRODUCT
INFORMATION B

STORAGE AREA A
DEDICATED TO
COMPANY A

PRODUCT
INFORMATION A

GIVE ACCESS AUTHORITY TO
COMPANY A BY COPYING
PRODUCT INFORMATION TO
SHARED AREA

ACQUIRE PRODUCT
INFORMATION
THAT COMPANY A
CAN ACCESS,
AND PROVIDE
PRODUCT
INFORMATION TO
COMPANY A

PERFORM
ASSOCIATION
BY UPDATING
PRODUCT
INFORMATION A

112

AUTHORITY
SETTING UNIT

PERMISSION
INFORMATION TO
PERMIT ACCESS FROM
COMPANY A TO
PRODUCT
INFORMATION B

GENERATE PRODUCT
TREE BASED ON
PRODUCT
INFORMATION

ASSOCIATION
UNIT

113

114

INFORMATION
PROVIDING UNIT

PRODUCT TREE

# FIG. 13

# FIG. 14

```
X ─── A1 ─── A11 ─── A111

        B1        A12 ─── A121

        C1        A13        A122

        D1        A14        A123

        E1
```

AAA CORPORATION
PRODUCT A12

AMOUNT OF USE OF LITHIUM         ... [g]
    AMOUNT OF LITHIUM RECYCLED   ... [g]
AMOUNT OF USE OF NICKEL          ... [g]
    AMOUNT OF NICKEL RECYCLED    ... [g]
AMOUNT OF USE OF COBALT          ... [g]
    AMOUNT OF COBALT RECYCLED    ... [g]
AMOUNT OF USE OF LEAD            ... [g]
    AMOUNT OF LEAD RECYCLED      ... [g]
CARBON DIOXIDE EMISSION AMOUNT... [g]
DD INFORMATION                      ...

# FIG. 15

```
X ─── A1 ─── UNDIS-CLOSED ─── UNDIS-CLOSED

       UNDIS-CLOSED ─── A12 ─── A121

       UNDIS-CLOSED     UNDIS-CLOSED     A122

       UNDIS-CLOSED     UNDIS-CLOSED     A123

       UNDIS-CLOSED
```

AAA CORPORATION
PRODUCT A121

AMOUNT OF USE OF LITHIUM        ... X [g]
    AMOUNT OF LITHIUM RECYCLED ... X [g]
AMOUNT OF USE OF NICKEL         ... X [g]
    AMOUNT OF NICKEL RECYCLED  ... X [g]
AMOUNT OF USE OF COBALT         ... X [g]
    AMOUNT OF COBALT RECYCLED  ... X [g]
AMOUNT OF USE OF LEAD           ... X [g]
    AMOUNT OF LEAD RECYCLED     ... X [g]

┌─────────────────────────────────────┐
│ CARBON DIOXIDE EMISSION AMOUNT       │
│ UNDISCLOSED                          │
└─────────────────────────────────────┘

DD INFORMATION                      ...

# FIG. 16

SERVER APPARATUS 1                                    COMPANY TERMINAL 2

S11
INPUT PRODUCT
INFORMATION

S12                          PRODUCT INFORMATION
STORE PRODUCT
INFORMATION

S13
INPUT PERMISSION
INFORMATION FOR
SPECIFIC PRODUCT

S14                          PERMISSION INFORMATION
GIVE ACCESS AUTHORITY
BASED ON PERMISSION
INFORMATION

S15
ASSOCIATION REQUEST          REQUEST FOR
ASSOCIATION OF
SPECIFIC PRODUCT

S16
IDENTIFY PRODUCT
INFORMATION PERMITTED
TO ACCESS AND GENERATE
ASSOCIATION SCREEN

S17
ASSOCIATION DATA             DESIGNATE
ASSOCIATION
DESTINATION

S18
REFLECT ASSOCIATION
DETAILS BY UPDATING
PRODUCT INFORMATION

# FIG. 17

SERVER APPARATUS 1             COMPANY TERMINAL 2

S21

REQUEST FOR
PRODUCT TREE

S22

INTEGRATE
TRACEABILITY-RELATED
INFORMATION AND
GENERATE INFORMATION
ON PRODUCT TREE

S23

EXECUTE CONFIDENTIAL
PROCESS ACCORDING TO
AUTHORITY

S24

OUTPUT
INFORMATION

# FIG. 18

# FIG. 19

| COMPANY ID | | C001 |
|---|---|---|
| COMPANY NAME | | COMPANY A |
| PRODUCT ID | | P001 |
| PRODUCT NAME | | PRODUCT A12 |
| ASSOCIATION-RELATED INFORMATION | UPSTREAM PRODUCT INFORMATION | NONE |
| | TERMINATION FLAG | 1 |
| TRACEABILITY-RELATED INFORMATION | AMOUNT OF USE OF MATERIAL (LITHIUM) | X[g] |
| | AMOUNT OF USE OF MATERIAL (NICKEL) | X[g] |
| | AMOUNT OF USE OF MATERIAL (COBALT) | X[g] |
| | AMOUNT OF USE OF MATERIAL (LEAD) | X[g] |
| | $CO_2$ EMISSION AMOUNT DURING PRODUCTION | X[g] |
| | DD INFORMATION | *** |
| PROXY INPUT FLAG | | 1 |
| *** | *** | *** |

# FIG. 20

12

| STORAGE UNIT | | |
|---|---|---|
| STORAGE AREA DEDICATED TO VIRTUAL COMPANY | STORAGE AREA SHARED BY FIRST COMPANY AND VIRTUAL COMPANY | STORAGE AREA DEDICATED TO FIRST COMPANY |
| SECOND PRODUCT INFORMATION A12 | SECOND PRODUCT INFORMATION A12 | FIRST PRODUCT INFORMATION A1 |

# FIG. 21

~12

| STORAGE UNIT | | |
|---|---|---|
| STORAGE AREA DEDICATED TO SECOND COMPANY | STORAGE AREA SHARED BY FIRST COMPANY AND SECOND COMPANY | STORAGE AREA DEDICATED TO FIRST COMPANY |
| SECOND PRODUCT INFORMATION A12 | SECOND PRODUCT INFORMATION A12 | FIRST PRODUCT INFORMATION A1 |

# FIG. 22

# FIG. 23

START

S101 — ACCEPT REQUEST TO
REGISTER VIRTUAL COMPANY

S102 — ACCEPT INPUT OF SECOND
PRODUCT INFORMATION

S103 — REGISTER SECOND PRODUCT
INFORMATION IN ASSOCIATION
WITH FIRST PRODUCT INFORMATION

S104 — SEND REGISTRATION COMPLETION
NOTIFICATION TO FIRST COMPANY
TERMINAL

S105 — SEND REQUEST TO CHECK
SECOND PRODUCT INFORMATION TO
SECOND COMPANY AS DESTINATION

END

# FIG. 24

```
                    ┌─────────────┐
                    │    START    │
                    └─────────────┘
                           │
                           ▼
S201 ──────        ╱ IS THERE ╲
                  ╱  ACCESS FROM  ╲        NO
                 ╱ SECOND COMPANY  ╲ ──────────┐
                 ╲   TERMINAL ?    ╱           │
                  ╲               ╱            │
                   ╲             ╱             │
                      │ YES                    │
                      ▼                        │
S202 ──────  ┌──────────────────────┐          │
             │ SEND INFORMATION ON  │          │
             │     TRACEABILITY     │          │
             └──────────────────────┘          │
                      │                        │
                      ▼                        │
S203 ──────        ╱ HAS CORRECTION ╲      NO   │
                  ╱ INFORMATION BEEN  ╲ ────────┤
                  ╲    RECEIVED ?    ╱          │
                   ╲               ╱            │
                      │ YES                     │
                      ▼                         │
S204 ──────  ┌──────────────────────┐           │
             │ ACCEPT INPUT OF CORRECTION │      │
             └──────────────────────┘           │
                      │                         │
                      ▼                         │
S205 ──────  ┌──────────────────────┐           │
             │ REFLECT CORRECTION DETAILS │     │
             └──────────────────────┘           │
                      │                         │
                      ▼                         │
S206 ──────  ┌──────────────────────┐           │
             │   SEND CORRECTION    │           │
             │ COMPLETION NOTIFICATION │        │
             └──────────────────────┘           │
                      │                         │
                      ▼◄───────────────────────┘
                    ┌─────────────┐
                    │     END     │
                    └─────────────┘
```

# FIG. 25

START

S301 — HAS ACCEPTANCE NOTIFICATION BEEN RECEIVED FROM SECOND COMPANY TERMINAL ?

NO

YES

S302 — GENERATE REGULAR ACCOUNT CORRESPONDING TO SECOND COMPANY

S303 — ALLOCATE STORAGE AREA

END

Europäisches
Patentamt
European
Patent Office
Office européen
des brevets

# EUROPEAN SEARCH REPORT

**Application Number**

EP 24 15 3659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/304030 A1 (BRYAN ANDRE [US]) 9 October 2014 (2014-10-09) * paragraphs [0002], [0008], [0020], [0033], [0039], [0044], [0048], [0074]; claim all; figure all * | 1-15 | INV. G06Q10/063 G06Q10/30 |
| A | WO 2022/149501 A1 (DENSO CORP [JP]) 14 July 2022 (2022-07-14) * paragraphs [0130] - [0153]; claim all; figure all * | 1-15 | |

**TECHNICAL FIELDS SEARCHED (IPC)**

G06Q

The present search report has been drawn up for all claims

| Place of search | Date of completion of the search | Examiner |
|---|---|---|
| Munich | 28 June 2024 | Diaz Calvo, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
### ON EUROPEAN PATENT APPLICATION NO.

EP 24 15 3659

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | Publication date |
|---|---|---|---|
| US 2014304030 A1 | 09-10-2014 | NONE | |
| WO 2022149501 A1 | 14-07-2022 | US 2023342703 A1 | 26-10-2023 |
| | | WO 2022149501 A1 | 14-07-2022 |

EPO FORM P0459

For more details about this annex : see Official Journal of the European Patent Office, No. 12/82

**REFERENCES CITED IN THE DESCRIPTION**

**Patent documents cited in the description**

- JP 2004171146 A